# EUROPÄISCHE PATENTANMELDUNG

(11) **EP 0 802 335 A1**
(43) Veröffentlichungstag der Anmeldung: **22.10.1997**
(21) Anmeldenummer: 97106312.8
(22) Anmeldetag: 16.04.1997
(51) Int. Cl.: F16B 7/04, F16B 7/02, F16B 12/40

(54) **Montagesystem, Verfahren zu dessen Aufbau und Profilleiste für ein solches Montagesystem**

(30) Priorität: 16.04.1996 DE 19615013; 16.10.1996 DE 29617989 U
(71) Anmelder: Mrd Medical Research and Development Patent Gmbh & Co.Kg, 54292 Trier (DE)
(72) Erfinder: Schmitt, Friedrich, 74296 Trier (DE)
(74) Vertreter: Lindner, Manfred Klaus, Dipl.-Psys.

(57) **Zusammenfassung**

Die Erfindung betrifft ein Montagesystem (1) mit wenigstens einem Rohrelement (2) und Verbindungseinrichtungen (4), durch die das Rohrelement (2) an einem Gegenstand (5) montierbar ist, wobei die Verbindungseinrichtungen (4) eine Arretiervorrichtung (40) mit einem Betätigungsende (41) enthalten, das koaxial in das Rohrelement (2) einsetzbar und in dessen Umfangsrichtung zum Festlegen und Freigeben der Arretiervorrichtung (40) in dem Rohrelement (2) und zum Verbinden der Verbindungseinrichtungen (4) mit dem Gegenstand (5) betätigbar ist, wobei das Rohrelement (2) in seiner Umfangswand (20) zumindest eine Öffnung (3) enthält, durch die das Betätigungsende (41) der Arretiervorrichtung (40) betätigbar ist. Die Öffnung (3) hat in der Umfangsrichtung des Rohres eine Länge, die einem Winkelbereich des Rohrelementquerschnitts von mehr als 90° bis zu mehr als etwa 180° entspricht. Das Betätigungsende (41) der Arretiervorrichtung (40) hat einen Außendurchmesser, der geringfügig kleiner als der Innendurchmesser des Rohrelements (2) ist, sowie eine axiale Länge, die größer als die axiale Ausdehnung der Öffnung (3) in der Umfangswand (20) des Rohrelements (2) ist. Bei einem Verfahren zum Aufbauen eines Rahmens oder Gestells (10) oder Anbringen von Gerätschaften (53) mit einem solchen Montagesystem (1) wird das Betätigungsende (41) der Arretiervorrichtung (40) der Verbindungseinrichtungen (4) durch die Öffnung (3) in der Umfangswand (20) des Rohrelements (2) in Umfangsrichtung des letzteren gedreht, wodurch eine Festlegung der Arretiervorrichtung (40) in dem Rohrelement (2) und der Verbindungseinrichtungen (4) an einem Gegenstand (5) bewirkt wird. Ferner kann zum Übergang zwischen den Rohrelementen (2) eines Rahmens (10) und einem darin einsetzbaren Plattenelement (9) wenigstens eine Profilleiste als Dichtelement (11) vorgesehen sein.

## Beschreibung

Die Erfindung betrifft ein Montagesystem nach dem Oberbegriff des Anspruchs 1, sowie ein Verfahren zum Aufbau von Konstruktionen mittels eines derartigen Montagesystems. Ferner ist von auch eigenständiger erfinderischer Bedeutung eine Profilleiste für ein solches Montagesystem.

Ein Montagesystem dieser Gattung weist wenigstens ein Rohrelement auf, das an einem Gegenstand durch Verbindungseinrichtungen montierbar ist. Letztere enthalten eine Arretiervorrichtung mit einem Betätigungsende, das koaxial in das Rohrelement einsetzbar und in dessen Umfangsrichtung zum Festlegen und Freigeben der Arretiervorrichtung in dem Rohrelement und zum Verbinden der Verbindungseinrichtungen mit dem Gegenstand betätigbar ist.

Aus der DE 35 23 155 A1, die ein Verbindungselement für Rohre betrifft, ist ein derartiges Montagesystem bekannt. Dabei werden die Rohre über Verbindungselemente an Verbindungsgliedern in Form von mit Gewindebohrungen kreuzweise durchsetzten Kugeln oder Polyedern für mehrere Rohre angebracht. Das Verbindungselement weist eine Spreizhülse und einen mit dieser axial verschieblich zusammenwirkenden Spreizkonus auf, der eine Axialbohrung enthält, in der eine Spannschraube frei drehbar geführt ist. Im Bereich ihres freien Schaftendes ist diese Spannschraube zum Einsetzen eines Imbusschlüssels mit einer entsprechenden Vertiefung versehen.

Zur Anbringung eines Rohrs an einem Verbindungsglied wird das Verbindungselement koaxial in das Rohr eingesetzt und diese Anordnung an eine Gewindebohrung des Verbindungsglieds angesetzt. Daraufhin wird der Imbusschlüssel von der dem Rohr abgewandten Seite des Verbindungsglieds durch die Gewindebohrung, an die die Rohr/Verbindungselement-Kombination angesetzt ist, hindurch in die Vertiefung im Schaftende der Spannschraube eingesteckt. Durch Drehung der Spannschraube mittels des Imbusschlüssels in Umfangsrichtung des Rohrs wird das Festlegen des Verbindungselements in dem Rohr und an dem Verbindungsglied bewirkt.

Dieses bekannte Montagesystem hat aber mehrere Nachteile. Damit das Verbindungselement beim Transport oder während der Montage nicht verrutschen kann, sieht die DE 35 23 155 A1 vor, daß die Spannhülse des Verbindungselements unter Vorspannung mit einem Festsitz mit geringem Kraftschluß in das Rohrende eingesetzt ist. Dadurch wird die Montage erschwert, da für das Einsetzen des Verbindungselements in das Rohr ein besonderes Geschick und eine Kraftanstrengung erforderlich sind.

Besonders nachteilig ist aber, daß der Imbusschlüssel koaxial zum Anschlußbereich des Rohrs in das Schaftende der Imbusschraube eingesetzt werden muß. Dazu ist es erforderlich, daß der Imbusschlüssel durch die Bohrung des Verbindungsgliedes hindurch gesteckt werden muß. Ist aber an dem Verbindungsglied bereits ein Rohr an einer Gewindebohrung befestigt, so kann der Imbusschlüssel durch letztere nicht mehr hindurchgeführt werden, um in derselben Gewindebohrung auf der entgegengesetzten Seite des Verbindungsgliedes ein weiteres Rohr anzubringen. In Abhängigkeit vom Durchmesser des Verbindungsgliedes und vom Einschraubweg der Imbusschrauben in das Verbindungsglied wird das Durchführen des Imbusschlüssels durch letzteres auch dann unterbunden oder erschwert, wenn überhaupt in einer Gewindebohrung bereits eine Imbusschraube eingeschraubt ist.

Um das letztere Problem zu lösen, wurden, wie in der Praxis bekannt wurde, spezielle Imbusschlüssel mit einer solchen Länge verwendet, daß sie durch das Rohr hindurch bis zur Schraube reichen, die an beiden Enden mit einer Imbusausgestaltung versehen ist. Abgesehen davon, daß es sehr schwierig ist, einen derart langen Imbusschlüssel durch das Rohr hindurch sicher in die Imbusausgestaltung der Schraube einzusetzen, und daß es sehr teueres Werkzeug erfordert, bei der erforderlichen Länge eine ausreichende Kraftübertragung durch Drücken und Drehen ohne Schaden zu nehmen zu übertragen, sind mit dieser Version weitere Probleme verbunden.

Für Änderungen an der Gestaltung z.B. eines mit dem Montagesystem aufgebauten Regals muß letzteres in der zum Aufbau entgegengesetzten Reihenfolge wieder bis zu der Stelle der geplanten Änderung abgebaut werden. Dies ist auch dann erforderlich, wenn bei der Montage etwas vergessen oder ein Fehler gemacht wurde, was durch die für die Verwendung des bekannten Systems erforderliche sorgfältige Planung der Aufbaureihenfolge leicht passieren kann. Daher benötigt man zum Aufbau eines Gestells o.ä. mit dem bekannten System selbst unter Zuhilfenahme von Sonderwerkzeug Personal mit viel Erfahrung, wobei jedoch eine Vergeudung von Arbeitszeit durch die vielfältigen Montagemöglichkeiten nicht ausgeschlossen werden kann, da auch erfahrenstes Montagepersonal immer wieder auf unbekannte Konstellationen stoßen kann, die nur durch Herumprobieren zu lösen sind.

Bei dem bekannten Montagesystem bleibt aber auch bei Verwendung von extra langem Werkzeug, wie Imbusschlüsseln, noch ein Nachteil bestehen, der darin liegt, daß das Werkzeug nicht durch z.B. gebogene oder geknickte oder absichtlich schräg angesetzte Rohre hindurchgeführt werden kann. In der Praxis angedachte Lösungen mit flexiblem Werkzeug haben sich als nicht tauglich herausgestellt, da einerseits das Zusammenführen der Imbusverbindung und andererseits eine ausreichende Kraftübertragung sowohl in Drehrichtung als auch in Druckrichtung des Werkzeugs schwierig bzw. unmöglich sind. Selbst bei nur geringen Abweichungen von einem geradlinigem Aufbau, wobei in der Praxis Imbusschlüssel mit einer Imbuskugel am freien Ende versucht werden, konnte weder ein einfaches Einsetzen des Schlüssels in die Schraube, noch eine ausreichende Drehbewegung des Werkzeugs und damit der Schraube, noch eine genügende Kraftübertragung sowohl in Druckrichtung des Imbusschlüssels als auch in dessen Drehrichtung gewährleistet werden. Diese letztgenannten Probleme sind weiterhin ungelöst.

Es sind noch weitere Montagesysteme bekannt geworden, wie z.B. dasjenige, das in der DT 26 07 738 A1 im Zusammenhang mit einem Kreuzstrebenpaßstück offenbart ist. Hierbei wird zunächst ein Arm an einen Gegenstand angeschraubt und dann ein Rohr über den Arm geschoben. Zur Befestigung des Rohrs auf dem Arm enthält dieser ein quer zu ihm bewegliches Teil, das an einer Schraube geführt ist, die bei auf den Arm aufgesetztem Rohr durch ein in letzterem geeignet angebrachtes Loch zugänglich ist. Wird die Schraube nach dem Aufschieben des Rohrs auf den Arm gedreht, so kann das bewegliche Teil des Arms gegen die Innenseite des Rohrs gedrückt werden, um letzteres an dem Arm festzuklemmen.

Da bei diesem bekannten System immer zuerst der Arm an den Gegenstand angeschraubt werden muß, bevor das Rohr plaziert werden kann, ist es nicht möglich, ein Rohr zwischen zwei fixierten Gegenständen einzufügen oder auszuwechseln. Änderungen am Aufbau oder Behebungen von Aufbaufehlern führen daher ebenfalls, wie bei dem System nach der DE 35 23 155 A1 dazu, daß beispielsweise ein Gestell bis zur zu ändernden Stelle wieder abgebaut werden muß, um die Änderung vornehmen zu können. Auch muß bei dem Montagesystem nach der DT 26 07 738 A1 die Aufbaureihenfolge sorgfältig geplant werden, so daß eine Aufbauaufgabe nur mit viel Erfahrung und selbst dann nicht sicher ohne zusätzlichen Montageaufwand für Änderungen möglich ist.

Aus der DE-OS 22 55 407 ist eine Verbindung von sich koaxial aneinander anschließenden Rohrabschnitten unter Verwendung eines die Stoßfuge der letzteren überbrückenden Innenrohrs bekannt. Durch von außen zugängliche Spannmittel wird das Innenrohr in Preßsitz mit der Innenwandung der Rohrabschnitte gebracht. Dies wird dadurch bewerkstelligt, daß ein in einem das Innenrohr verspannenden Kernstück angeordneter, eine Querbohrung eines Rohrabschnittes durchsetzender Spanndorn durch einen in Umfangsrichtung verlaufenden Schlitz in der Wandung des Innenrohrs tritt. Die Schlitzausbildung in dem Innenrohr zur Durchführung des Spanndorns dient lediglich dazu, ein Verdrehen der noch nicht endgültig aneinander angebrachten Rohre im Bereich des Schlitzes zuzulassen. Wie bei dem System nach der DT 26 07 738 A1 so wird auch hier eine Betätigung zur Verklemmung eines Einsatzes mit dem Rohr durch eine bezüglich letzterem radiale Schraube erreicht, so daß die entsprechende Planung des Montageablaufs und der entsprechende Zusatzaufwand bei Änderungen auch hier erforderlich sind.

Gattungsgemäße Montagesysteme, bei denen das Rohrelement in seiner Umfangswand zumindest eine Öffnung enthält, die in einem auf das in das Rohrelement eingesetzte Betätigungsende der Arretiervorrichtung abgestimmten Abstand vom axialen Ende des Rohrelements angeordnet und durch die das Betätigungsende der Arretiervorrichtung betätigbar ist sind aus den Druckschriften CH 681 907 A5, DE-GM 70 14 538 und DE-GM 18 89 913 bekannt. Alle diese Montagesysteme haben jedoch den Nachteil, daß die Öffnung in der Umfangswand nur eine begrenzten Betätigungsweg für die Verbindungseinrichtungen bzw. deren Arretiervorrichtung zuläßt, so daß es sehr mühsam ist, das System zu montieren.

Die Erfindung hat zum Ziel, ein Montagesystem der eingangs genannten Gattung derart weiterzubilden, daß ein einfacher Aufbau des Systems möglich ist.

Erfindungsgemäß wird dieses Ziel mit einem Montagesystem nach dem Anspruch 1 erreicht.

Bei dem hiermit geschaffenen Montagesystem ist zusätzlich zu den gattungsbestimmenden Merkmalen vorgesehen, daß das Rohrelement in seiner Umfangswand zumindest eine Öffnung enthält, die in einem auf das in das Rohrelement eingesetzte Betätigungsende der Arretiervorrichtung abgestimmten Abstand vom axialen Ende des Rohrelements angeordnet und durch die das Betätigungsende der Arretiervorrichtung betätigbar ist.

Durch die erfindungsgemäße Ausgestaltung kann das Rohrelement jederzeit an einen beliebigen, zum Anschluß der Verbindungseinrichtungen vorbereiteten Gegenstand montiert werden.

Die Öffnung in der Umfangswand des Rohrelements ermöglicht dabei einerseits eine einfache und leichte Betätigung der Arretiervorrichtung über deren Betätigungsende, wobei auf Grund des kurzen Weges durch die Umfangswand hindurch eine optimale Kraftübertragung zur Drehbetätigung des Betätigungsendes erfolgen kann, und ohne daß ein besonderes Geschick für diese Betätigung erforderlich ist, unabhängig davon, ob ein Werkzeug verwendet werden muß oder nicht.

Ein zur Betätigung der Arretiervorrichtung ggf. erforderliches Werkzeug kann ohne besonderes Können direkt an dem Betätigungsende angesetzt werden. Das Betätigungsende kann aber evtl. auch selbst oder über daran fest installierte Hilfsmittel durch die Öffnung betätigbar sein, so daß kein Werkzeug erforderlich ist. Der in jedem Fall kurze Angriffsweg zum Betätigungsende der Arretiervorrichtung gestattet eine optimale Kraftübertragung darauf, ohne daß Kräfte in langen oder flexiblen Werkzeugverlängerungen verloren gehen.

Dadurch, daß ein Zugriff zum Betätigen der Arretiervorrichtung nicht axial bezüglich des Rohrelements erfolgt, können die Enden des letzteren ungehindert und ohne vorherige Montageschritte berücksichtigen zu müssen frei an dem ausgewählten Gegenstand angesetzt werden. Auch in gekrümmten oder geknickten Rohrgestaltungen ist ein problemloses und optimales Erreichen des Betätigungsendes der Arretiervorrichtung sichergestellt.

Andererseits kann durch die Zugriffsmöglichkeit durch die Öffnung in der Umfangswand des Rohrelements auf das Betätigungsende der Arretiervorrichtung diese bzw. können dadurch die gesamten Verbindungseinrichtungen innerhalb des Rohrelements positioniert werden, so daß das Montieren an dem Gegenstand vorgenommen werden kann. Bei beispielsweise einer vertikalen Montageausrichtung des Rohrelements können so die Verbindungseinrichtungen nicht in letzterem verrutschen und müssen aber auch nicht vorher durch einen Zusatzaufwand bereits darin festgelegt werden.

Durch die Erfindung wird somit ein universelles und leicht handhabbares Montagesystem geschaffen.

Insbesondere zum Aufbau von Rahmen und Gestellen, wie für Möbel, ist es vorteilhaft und daher bevorzugt, wenn in beiden axialen Endbereichen des Rohrelements jeweils eine Öffnung in der Umfangswand des Rohrelements vorgesehen ist. Dabei können die beiden Öffnungen in der Umfangswand des Rohrelements auf einer Linie parallel zur Rohrelementachse miteinander ausgerichtet sein, so daß sie im montierten Zustand des Rohrelements in die gleiche Richtung, beispielsweise ins Innere eines damit aufgebauten Gestells, weisen. Alternativ kann aber auch vorgesehen sein, daß die beiden Öffnungen in der Umfangswand des Rohrelements in dessen Umfangsrichtung insbesondere um 90° oder um 180° gegeneinander versetzt sind. Damit kann einer möglicherweise unterschiedlichen Zugänglichkeit der beiden Öffnungen in einem Gestell oder Rahmen Rechnung getragen werden, um eine Optimierung zu erreichen.

Gemäß einer bevorzugten Ausgestaltung der Erfindung enthält die Öffnung in der Umfangswand des Rohrelements einen Umfangsschlitzabschnitt, der in einem auf das in das Rohrelement eingesetzte Betätigungsende der Arretiervorrichtung abgestimmten Abstand vom axialen Ende des Rohrelements angeordnet und insbesondere zum Einführen eines Werkzeugs zur Betätigung des Betätigungsendes der Arretiervorrichtung ausgelegt ist. Durch die Schlitzgestaltung in Umfangsrichtung des Rohrelements wird die Öffnung hinsichtlich der erforderlichen Drehbewegung in dieser Richtung in geeigneter Weise minimal klein gehalten.

Bevorzugte Abmessungen des Umfangsschlitzabschnitts in dessen Längsausdehnung sind ein Winkelbereich des Rohrelementquerschnitts von ungefähr 30° bis etwa 180°, insbesondere von ca. 60° bis annähernd 120° und vorzugsweise ungefähr 90°.

Wenn durch die durch die Betätigung des Betätigungsendes der Arretiervorrichtung in Umfangsrichtung des Rohrelements zum Montieren des Rohrelements mittels der Verbindungseinrichtungen an einem Gegenstand ein Reaktionsweg der Arretiervorrichtung oder der Verbindungseinrichtungen in Richtung der Rohrelementachse bewirkt wird, ist es von Vorteil und eine bevorzugte Möglichkeit, wenn der Umfangsschlitzabschnitt in Richtung der Rohrelementachse eine entsprechende Ausdehnung hat.

In Abhängigkeit von der Kopplungsmöglichkeit des Betätigungsendes mit einem Werkzeug dafür kann es ferner vorteilhaft sein, wenn die Öffnung in der Umfangswand des Rohrelements einen Axialschlitzabschnitt enthält, der in einem auf das in das Rohrelement eingesetzte Betätigungsende der Arretiervorrichtung abgestimmten Abstand vom axialen Ende des Rohrelements angeordnet und zum Einführen eines Werkzeugs zur Betätigung des Betätigungsendes der Arretiervorrichtung ausgelegt ist. Dadurch können auch gekröpfte oder abgewinkelte Werkzeuge zur Betätigung der Arretiervorrichtung zum Einsatz kommen, die den Spielraum der verwendbaren Kopplungsmöglichkeiten von Werkzeug und Betätigungsende vergrößern und die Zugänglichkeit des Betätigungsende im Rahmen einer Gesamtkonstruktion mit dem Montagesystem verbessern.

Vorzugsweise hat das Betätigungsende der Arretiervorrichtung einen Außendurchmesser, der geringfügig kleiner als der Innendurchmesser des Rohrelements ist, so daß ein leichtes Einführen in das Rohrelement und eine gute Führung darin erfolgt.

Es ist ferner von Vorteil, wenn das Betätigungsende der Arretiervorrichtung eine axiale Länge hat, die größer als die axiale Ausdehnung der Öffnung in der Umfangswand des Rohrelements ist. Insbesondere mit einem auf den Rohrelement-Innendurchmesser abgestimmten Außendurchmesser des Betätigungsendes wird dadurch eine Abstützung, Versteifung und somit insgesamt Stabilisierung des Rohrelements im Bereich der Öffnung erreicht, so daß hier keine Schwachstelle entsteht, die den Belastungen, die das Rohrelement im übrigen aufzunehmen vermag, nicht widerstehen kann.

Das Bewerkstelligen der Betätigung der Arretiervorrichtung über deren Betätigungsende kann auf vielfache Weise geschehen. Eine bevorzugte Version besteht darin, daß das Betätigungsende der Arretiervorrichtung für einen formschlüssigen Ansatz eines Werkzeugs zumindest eine Eingriffsvertiefung enthält, die bei in das Rohrelement eingesetzter Arretiervorrichtung durch die Öffnung in der Umfangswand des Rohrelements zum Ansetzen des Werkzeugs zugänglich ist.

Eine Alternative oder Ergänzung zu der vorher angegebenen Ausgleichsmöglichkeit im Falle einer Verstellung der Arretiervorrichtung auch in Achsenrichtung des Rohrelements durch eine entsprechende Abmessung der Öffnung bzw. des Schlitzes in Rohrelement-Achsenrichtung besteht darin, daß jede Eingriffsvertiefung am Betätigungsende der Arretiervorrichtung in Richtung der Rohrelementachse eine Ausdehnung hat, die einem durch die Betätigung des Betätigungsendes der Arretiervorrichtung in Umfangsrichtung des Rohrelements bewirkbaren Reaktionsweg der Arretiervorrichtung in Richtung der Rohrelementachse zum Montieren des Rohrelements durch die Verbindungseinrichtungen an einem Gegenstand entspricht.

Eine nur einen minimalen Herstellungs- und Montageaufwand erfordernden Ausführung der Erfindung kennzeichnet sich dadurch, daß im Umfang des Betätigungsendes der Arretiervorrichtung zumindest zwei Eingriffsvertiefungen in Form von Radialbohrungen vorgesehen sind, die in Umfangsrichtung einen derartigen Abstand haben, daß zumindest zwei Radialbohrungen gleichzeitig durch die Öffnung oder ggf. den Umfangsschlitzabschnitt zugänglich sind. Damit steht nichts aus der Öffnung nach außerhalb des Rohrelements vor und lediglich ein für die Radialbohrungen passender Stift benötigt, um die Arretiervorrichtung zu betätigen, wozu der Stift nur von einer Radialbohrung zur anderen innerhalb der Öffnung umgesteckt werden braucht, um eine Weiterdrehung des Betätigungsendes der Arretiervorrichtung über die Abmessung der Öffnung in Umfangsrichtung des Rohrelements mit dem Stift vornehmen zu können.

Eine Alternative zu den Radialbohrungen im Betätigungsende der Arretiervorrichtung besteht darin, daß eine Mehrzahl von Eingriffsvertiefungen in Form einer Zahnung des Umfangs des Betätigungsendes der Arretiervorrichtung vorgesehen sind. Mit einem darauf abgestimmten Werkzeug, eventuell mit einer Knarre oder Ratsche, kann die Drehbetätigung der Arretiervorrichtung über eine sehr gute Kopplung von Betätigungsende und Werkzeug durchgeführt werden. Weiterhin ermöglicht diese Ausgestaltung auch die Verwendung z.B. eines Akkuschraubers o.ä., der mit einem an die Zahnung am Betätigungsende der Arretiervorrichtung angepaßten Zahnrad versehen eine motorbetriebene Betätigung der Arretiervorrichtung gestattet. Diese Variante ist besonders vorteilhaft, wenn für die Verbindung von Rohrelement und Gegenstand eine größere Anzahl von Umdrehungen des Betätigungsendes der Arretiervorrichtung erforderlich ist.

Eine weitere Angriffsmöglichkeit für ein entsprechendes Werkzeug an dem Betätigungsende der Arretiervorrichtung besteht darin, letzteres derart auszugestalten, daß die Eingriffsvertiefung am freien Ende des Betätigungsendes der Arretiervorrichtung vorgesehen ist und vorzugsweise eine Imbus-, Torax-, Schlitz-, Kreuzschlitz- o.ä. Ausgestaltung hat. Diese gängigen Kraftübertragungskopplungen, aber auch andere, können in vorteilhafter Weise mit handelsüblichem Werkzeug, evtl. mit nur einem unaufwendigen Adapterelement, bedient werden.

Wenn es aus gestalterischen Gesichtspunkten heraus und auf Grund der Platz- und sonstigen Anforderungen an die Montagekombination vertretbar und/oder zulässig ist, kann gemäß eines weiteren Ausführungsbeispiels vorgesehen sein, daß das Betätigungsende der Arretiervorrichtung einen Handhabe aufweist, die bei in das Rohrelement eingesetzter Arretiervorrichtung durch die Öffnung in der Umfangswand des Rohrelements zugänglich ist. Für die Montage wird dann kein Werkzeug benötigt. Es kommt bei dieser Variante nicht darauf an, ob die Handhabe über die Umfangswand des Rohrelements nach außen vorsteht oder nicht, d.h. durch die Öffnung vollständig hindurch geht oder nicht, sondern nur darauf, daß die Öffnung und die handhabe so aufeinander abgestimmt sind, daß die zur Betätigung des Betätigungsendes der Arretiervorrichtung erforderliche Bewegung und Kraft auf das Betätigungsende übertragen werden kann.

Es ist ein allgemeiner Grundsatz der vorliegenden Erfindung, daß die Öffnung nur die Aufgabe der Vermittlung der Bewegungs- und Kraftübertragungsmöglichkeit vom Bediener zur Arretiervorrichtung erfüllen muß. Wie dies gewährleistet wird, kann bei den angegebenen und anderen vorteilhaften Weiterbildungen der Erfindung unterschiedlich sein.

Wenn zum Ausführen einer Drehbetätigung der Arretiervorrichtung in Umfangsrichtung des Rohrelements in einem konkreten Montagezusammenbau nicht genügend Platz vorhanden ist, oder aber als weitere alternative Gestaltungsmöglichkeit, können solche Verbindungseinrichtungen eingesetzt werden, die eine mit ihrer Ausgangsseite am Betätigungsende der Arretiervorrichtung angreifende Umlenkvorrichtung enthalten, die die Betätigungsrichtung des Betätigungsendes der Arretiervorrichtung in eine Drehbetätigung um eine Drehachse quer, insbesondere zumindest annähernd senkrecht zur Rohrelementachse umlenkt. Die umgelenkte Drehachse verläuft dabei dann durch die Öffnung in der Umfangswand des Rohrelements, so daß die Eingangsseite der Umlenkvorrichtung durch die Öffnung in der Umfangswand des Rohrelements insbesondere zur Betätigung mit einem Werkzeug zugänglich ist.

Eine bevorzugten Ausgestaltung der Erfindung besteht darin, daß die Arretiervorrichtung eine durch Betätigung ihres Betätigungsendes in Umfangsrichtung radial aufweitbare Klemmvorrichtung enthält, mittels der die Arretiervorrichtung zumindest gegen Kräfte in Richtung eines Herausziehens der Arretiervorrichtung aus dem Rohrelement in letzterem kraftschlüssig, vorzugsweise durch Reibschluß, lösbar festlegbar ist. Solche Klemmvorrichtungen sind kostengünstig herzustellen und funktionieren ausreichend zuverlässig.

Eine Realisierungsmöglichkeit der Klemmvorrichtung sieht vor, daß sie zum Reibschluß mit dem Rohrelement ein koaxial in letzteres einführbares, rohrförmiges Elastikelement enthält, das durch Drehbetätigung des Betätigungsendes der Arretiervorrichtung in Achsenrichtung des Rohrelements unter radialer Aufweitung gegen die Innenwand des Rohrelements reversibel axial stauchbar ist. Bevorzugt ist dabei das rohrförmige Elastikelement ein elastischer Schlauch oder Schlauchstück insbesondere aus Gummi oder Kunststoff.

Ein Elastikelement in Form eines Schlauchs oder Schlauchstücks insbesondere aus Gummi oder Kunststoff, aber auch aus z.B. Federstahl oder elastisch verbundenen Gliedern, hat dabei den Vorteil, daß es auf Grund seiner Eigenelastizität die Arretierung der Arretiervorrichtung in dem Rohrelement beim Lösen dessen Verbindung mit dem Gegenstand automatisch und zuverlässig aufhebt. Ferner stellt ein derartiges Elastikelement, wenn es aus Gummi oder Kunststoff besteht oder zumindest der Innenwand des Rohrelements zugewandte und damit in Kontakt kommende Oberflächenbereiche aus einem solchen Material aufweist, materialbedingt eine gute Reibhaftung bereit. Dadurch kann auch bei kleinen Anpreßkräften der Klemmvorrichtung an der Rohrelement-Innenwand und/oder kleinen Verstellwegen der Arretiervorrichtung eine feste Verbindung der letzteren mit dem Rohrelement sichergestellt werden.

Als alternative Bauform der Klemmvorrichtung ist vorgesehen, daß letztere zum Reibschluß mit dem Rohrelement einen koaxial in letzteres einführbaren, unter Bildung von Rampenflächen schräg geteilten zweiteiligen Zylinder enthält, der durch Drehbetätigung des Betätigungsendes der Arretiervorrichtung unter Aufweitung in Richtung eines Durchmessers des Zylinders über die Rampenflächen gegen die Innenwand des Rohrelements reversibel axial zusammenschiebbar ist. Die Rampenflächen bewirken somit eine Verbreiterung oder Verschmälerung des Zylinders wenigstens in einer Dimension quer zu seiner Längsausdehnung oder geometrischen Höhe, um ein Klemmen zu bewerkstelligen bzw. zu lösen. Diese Wirkung wird dadurch erreicht, daß durch Betätigung des Betätigungsendes der Arretiervorrichtung die beiden Zylinderteile in Richtung der Zylinderachse gegeneinander verschoben werden.

Der Herstellungsaufwand eines derartigen zylinderförmigen Klemmelements kann in vorteilhafter Weise besonders gering gehalten werden, wenn der Zylinder aus zwei identischen Teilen gebildet wird, die sich insbesondere durch einen schräg durch seine Grundflächen verlaufenden Schnitt ergeben. Das heißt auch, daß die Rampenflächen nur wenig gegen die Zylinderachse geneigt sein brauchen, um die erforderliche geringe Aufweitung zu erreichen. Ferner wird über flache Rampenflächen durch eine geringe Verstellkraft für die Verstellung der Zylinderteile gegeneinander in Richtung der Zylinderachse eine hohe Anpreßkraft der Zylinderteile gegen die Rohrelement-Innenwand, also senkrecht zur Zylinderachse, erreicht.

Bei einer anderen ebenfalls vorteilhaften Bauform des zweiteiligen Zylinders ist dieser so geteilt, daß die Trennungsebene nicht durch die geometrischen Grundflächen des zusammengesetzten Zylinders, sondern nur durch dessen Umfangs- oder Mantelfläche verlaufen und zwar in einem solchen Abstand von den Grundflächen, daß auch bei maximal zusammengeschobenen Zylinder keine Abschnitt eines Zylinderteils über die Grundfläche des jeweils anderen Zylinderteils vorsteht. Dadurch stehen die Grundflächen an den beiden Zylinderteilen uneingeschränkt als Anlage- oder Betätigungsflächen zur Verfügung.

Grundsätzlich sind auch andere Spreitzelemente als die wie vorstehend beschrieben geteilten Zylinderkörper oder Elastikelemente im Zusammenhang mit der Klemmvorrichtung verwendbar.

Statt der Klemmvorrichtung kann die Arretiervorrichtung eine durch Betätigung ihres Betätigungsendes in Umfangsrichtung betätigbare Verriegelungsvorrichtung enthalten, mittels der die Arretiervorrichtung zumindest gegen Kräfte in Richtung eines Herausziehens der Arretiervorrichtung aus dem Rohrelement in letzterem formschlüssig und lösbar festlegbar ist. Dabei kann vorgesehen sein, daß die Verriegelungsvorrichtung durch Betätigung des Betätigungsendes der Arretiervorrichtung in Umfangsrichtung zu einer formschlüssigen Verbindung mit dem Rohrelement radial aufweitbar ist. Eine formschlüssige Verriegelung der Verbindungseinrichtungen mit dem Rohrelement ist besonders dann einer reinen Klemmung vorzuziehen, wenn eine außerordentliche Zugbelastung in Rohrelement-Achsenrichtung auftreten kann und/oder wenn Sicherheitserwägungen in Betracht zu ziehen sind.

Für eine besonders zugfeste und gleichzeitig spielfreie Arretierung der Verbindungseinrichtungen in dem Rohrelement, können auch die Klemmvorrichtung und die Verriegelungsvorrichtung bzw. deren Merkmale kombiniert werden.

Als einfache, wirksame und kostengünstige Realisierungsmöglichkeit für die Betätigung der Klemmvorrichtung bzw. der Verriegelungsvorrichtung sieht die Erfindung bevorzugt einen Bolzen mit einer gewindeähnlichen Ausbildung oder eine Schraube vor, dessen bzw. deren Kopf das Betätigungsende der Arretiervorrichtung bildet.

Um die Montage schnell und einfach zu gestalten, besteht die Möglichkeit gemäß einer Weiterbildung, daß die Arretiervorrichtung derart ausgebildet ist, daß zu ihrem Verstellen zwischen einem freien und einem arretierten Zustand in dem Rohrelement maximal eine Umdrehung des Bolzens oder der Schraube und vorzugsweise nur eine Teilumdrehung des Bolzens oder der Schraube erforderlich ist. Das Ausmaß der Axialbewegung der Arretiervorrichtung oder innerhalb derselben kann durch die gewählte Steigung des Gewindegangs auf ein erforderliches und mit zuträglichem Kraftaufwand erfüllbares Maß eingestellt werden. Eventuell kann an einem oder beiden Enden der Drehbewegung eine Rastmöglichkeit und/oder eine bajonettverschlußartige Ausgestaltung vorgesehen sein.

Hinsichtlich der Verbindung des Rohrs bzw. der Verbindungseinrichtungen mit dem Gegenstand sieht eine bevorzugte Ausführung der Erfindung vor, daß die Verbindungseinrichtungen durch Drehbetätigung am Betätigungsende über eine Verschraubung an einem Gegenstand festlegbar sind, wobei ggf. insbesondere der Bolzen oder die Schraube zur Betätigung der Klemmvorrichtung bzw. der Verriegelungsvorrichtung in den Gegenstand eindrehbar, einrückbar oder einschraubbar ist.

Alternativ oder zusätzlich kann die vorerwähnte Verbindung dadurch bewerkstelligt werden, daß die Verbindungseinrichtungen durch Drehbetätigung am Betätigungsende über eine Klemmung oder Verriegelung an einem Gegenstand festlegbar sind, wobei ggf. insbesondere die Klemmvorrichtung bzw. die Verriegelungsvorrichtung der Arretiervorrichtung zu deren Festlegung in dem Rohrelement in einer Öffnung oder Bohrung in dem Gegenstand lösbar festlegbar ist.

Die Gestaltungsmöglichkeiten des erfindungsgemäßen Montagesystems lassen sich in rationeller Weise dadurch erhöhen, daß als Gegenstand, an dem das Rohrelement anbringbar ist, ein zum Montagesystem gehörendes Knotenelement insbesondere in Form eines Würfels, eines Quaders oder einer Kugel verwendet wird, wobei das Knotenelement eine Mehrzahl von Bohrungen zum Befestigen von Rohrelementen mittels der Verbindungseinrichtungen durch Verschraubung, Verriegelung oder Klemmung enthält. Bei den Knotenelementen nach der Erfindung ist es jedoch nicht nötig, daß die Aufnahmebohrungen durch das Knotenelement hindurchgehen, sondern es reicht aus, wenn es sich dabei um Sacklöcher, ggf. mit einem Gewinde, ausreichender Tiefe handelt. Dadurch kann die Stabilität der Knotenelemente erhöht werden, oder letztere können aus einem leichteren Material oder in einer anderweitig leichteren Ausführung bestehen.

Vorzugsweise sind Knotenelemente mit unterschiedlichen Anzahlen und/oder Anordnungen von Bohrungen vorgesehen. Da für die Montage des erfindungsgemäßen Systems nie ein Hindurchführen eines Werkzeugs durch ein Knotenelement erforderlich ist, können entsprechend der Montageanforderungen unnötige Löcher oder Bohrungen einzelner Knotenelemente vermieden werden, wodurch eine mittels des Systems hergestellte Konstruktion leicht und sicher gereinigt werden kann, was z.B. bei der Anwendung der Erfindung zur Herstellung von Labor-, Arztpraxen- und Krankenhauseinrichtungen und -möbeln vorteilhaft ist. Diese Möglichkeit wird gegenüber gattungsgemäßen bekannten Systemen erstmals durch die vorliegende Erfindung geschaffen.

Sollten aus Kosten- und/oder anderen Gründen, wie beispielsweise die Erhaltung einer problemlosen Erweiterungsmöglichkeit, universelle Knotenelemente verwendet werden, so sieht eine andere Weiterbildung des erfindungsgemäßen Montagesystems vor, daß Verschlußmittel zum Verschließen von nicht zum Anbringen eines Rohrelements benötigten Bohrungen in einem Knotenelement vorgesehen sind. Je nach Einsatzanforderungen können hier nach gestalterischen und/oder funktionellen, wie reinigungstechnischen Gesichtspunkten unterschiedliche Verschlußmittel verwendet werden.

Das Vorsehen von Rohrelementen mit unterschiedlichen Längen, insbesondere Längen in Vielfachen einer Grundlängeneinheit, ermöglicht die Bereitstellung eines modularen Systems, das gut und einfach kalkulierbar und planbar ist.

Bevorzugt wird das erfindungsgemäße Montagesystem zum Aufbauen bzw. Herstellen von Rahmen oder Gestellen aus den Rohrelementen oder ggf. aus den Rohr- und den Knotenelementen verwendet. Wie sich aus dieser Angabe ergibt, kann das vorliegende Montagesystem selbst zum Erstellen von Rahmen und Gestellen so ausgestattet sein, daß es grundsätzlich auch ohne Knotenelemente auskommt. Die Aufnahmen zum Anschließen der Verbindungseinrichtungen eines Rohrelements müssen dann in der Umfangswand eines anderen Rohrelements vorgesehen sein. Dabei gibt es ausreichende Möglichkeiten, daß diese besagten Aufnahmen die Rohrelement-Endbereiche für die jeweils eigenen Verbindungseinrichtungen nicht stören. Zur Anpassung eines eine ungekrümmte Ebene definierenden Rohrelementendes an die zylindrisch gekrümmte Außenwand eines anderen Rohrelements, an das das erstere angeschlossen werden soll, können entsprechend geformte Ausgleichsstücke zwischen den beiden Rohrelementen verwendet werden.

Das Montagesystem gemäß der vorliegenden Erfindung kann durch Plattenelemente komplettiert werden, die als Wände und Fachböden in die Rahmen oder Gestelle einsetzbar sind. Statt der Platten können zur Erweiterung des Angebotsspektrums auch Halterungen oder Aufnahmen für Türen, Schübe, Scharniere, Polster u.v.m. als Funktionselemente zum Einsetzen in die Rahmen oder Gestelle vorgesehen werden. In Anpassung an die Längenrasterung der Rohrelemente können auch bei den Platten und Funktionselementen Einheitsgrößen und Vielfache davon zum Einsatz kommen.

Bei einigen Anwendungen, die mittels des erfindungsgemäßen Montagesystems aufgebaut werden können, ist es vorteilhaft, wenn ein Dichtelement oder Dichtelemente enthalten sind, die entsprechend ihren Ausführungen die Herstellung dichter Räume gestatten. Damit die Öffnungen in der Umfangswand der Rohrelemente einerseits nicht das Design stören und andererseits nicht schwer zu reinigende Stellen bilden, ist insbesondere vorgesehen, daß das Dichtelement oder die Dichtelemente zum Abdecken und vorzugsweise Abdichten der Öffnung oder Öffnungen in der Umfangswand des Rohrelements angeordnet und ausgelegt ist bzw. sind.

Die vorerwähnten Dichtelemente können an dem Rohrelement oder ggf. vorzugsweise an dem Plattenelement angeordnet sein.

Um beispielsweise eine vorgegebene Ausrichtung von zwei Knotenelementen an den Enden eines Rohrelements ohne weiteres sicherzustellen, sind bei einer weiteren bevorzugten Ausführungsform der Erfindung Ausrichtmittel vorgesehen, mittels derer eine vorgebbare Relativlage von Rohrelement und Gegenstand, an dem das Rohrelement angebracht werden soll, insbesondere hinsichtlich der Drehlage des Rohrelements um seine Achse, einstellbar ist. D.h., daß durch die Ausrichtmittel sichergestellt werden kann, daß die beim o.g. Beispiel an den zwei Enden eines Rohrelements zu befestigenden Knotenelemente eine vorgegebene und aufeinander abgestimmte Ausrichtung hinsichtlich ihrer anderen Aufnahmen zum Montieren weiterer Rohrelemente haben, so daß mit dem vorliegenden Montagesystem beispielsweise automatisch immer in drei zueinander senkrechten Ebenen gebaut wird.

Je nach Einsatzort und Verwendungszweck können die Bestandteile des Montagesystems nach der Erfindung, d.h. die Rohrelemente, die Knotenelemente und/oder die Plattenelemente aus Metall, Holz oder Kunststoff oder einer Kombination daraus bestehen. Die Materialauswahl kann ohne Einschränkungen des Montagesystems selbst vollständig auf die Funktion und das Design der damit zu erstellenden Konstruktion abgestellt werden.

Die Größe, das Material und die Stabilität der Ausführung der einzelnen Bestandteile des erfindungsgemäßen Montagesystems sind bevorzugt auf die Herstellung von Möbeln ausgelegt.

Ein weiteres Ziel der vorliegenden Erfindung besteht darin, ein Verfahren zum Aufbau einer Konstruktion mit einem vorgenannten Montagesystem anzugeben.

Das Verfahren zum Aufbauen eines Rahmens oder Gestells oder zum Anbringen von Gerätschaften mit einem Montagesystem nach der vorliegenden Erfindung umfaßt folgende Schritte:
- Einsetzen der Arretiervorrichtung der Verbindungseinrichtungen mit ihrem Betätigungsende voraus in ein Rohrelement,
- Ansetzen dieser Rohrelement/Verbindungseinrichtungen-Kombination an eine geeignete Aufnahme an oder in dem Gegenstand, an dem das Rohrelement montiert werden soll, und
- Drehen des Betätigungsendes der Arretiervorrichtung der Verbindungseinrichtungen durch die Öffnung in der Umfangswand des Rohrelements in Umfangsrichtung des letzteren, um eine Festlegung der Arretiervorrichtung in dem Rohrelement und der Verbindungseinrichtungen an einem Gegenstand, wie sowohl axial als auch radial an einem anderen Rohrelement, an einem Knotenelement oder an einer Wand, zu bewirken.

Somit wird außer durch die Vorrichtungsmerkmale des Montagesystems nach der vorliegenden Erfindung auch ein neues und wegen seiner Einfachheit vorteilhaftes Verfahren zur Verwendung eines gattungsgemäßen Montagesystems bereitgestellt.

Dabei kann das Festlegen der Arretiervorrichtung in dem Rohrelement und das Festlegen der Verbindungseinrichtungen an einem Gegenstand durch die Drehbetätigung des Betätigungsendes der Arretiervorrichtung gleichzeitig oder nacheinander erfolgen. Vorzugsweise erfolgt jedoch durch Betätigen des Betätigungsendes der Arretiervorrichtung zunächst das Festlegen der Verbindungseinrichtungen an einem Gegenstand und dann das Festlegen der Arretiervorrichtung in dem Rohrelement. Dabei ist weiterhin bevorzugt, daß die stabile Befestigung der Arretiervorrichtung in dem Rohrelement und die stabile Befestigung der Verbindungseinrichtungen an einem Gegenstand durch die Drehbetätigung des Betätigungsendes der Arretiervorrichtung ein kombinierter Vorgang ist.

Je nach Profilierung und Einpassung der Plattenelemente kann es zwingend oder fakultativ sein, daß letztere in Längsrichtung der Rohrelemente in die Platten nicht vollständig umfassende Rahmen- oder Gestellteile eingeschoben werden müssen. Werden dem Umfang der Plattenelemente zugeordnete Dichtungen oder andere nachgiebige Ausgestaltungen verwendet, so kann auch ein Einsetzen der Plattenelemente in sie komplett umgebende Rahmen oder Gestelle durch Einschnappen evtl. in Verbindung mit einem gekippten Einsetzen der Plattenelemente möglicherweise oder absichtlich realisiert sein.

Das vorher bereits angesprochene Abdichten insbesondere der Öffnungen in den Umfangswänden der verbauten Rohrelemente durch ein Dichtelement oder Dichtelemente kann je nach Ausführung vor dem, durch das oder nach dem Einsetzen der Plattenelemente in wenigstens Rahmen- oder Gestellteile zur Abdeckung und vorzugsweise Abdichtung der besagten Öffnungen erfolgen. Durch das oder nach dem anschließenden Anbauen von den Rahmen oder das Gestell komplettierenden Rohrelementen können dann die Öffnungen in deren Umfangswänden durch ein Dichtelement oder Dichtelemente abgedeckt und vorzugsweise abgedichtet werden.

Die bereits weiter oben erläuterte Ausführung des erfindungsgemäßen Montagesystems mit einem endseitigen Zahnrad zur Betätigung der Arretiervorrichtung bringt verfahrensmäßig den Vorteil mit sich, daß die Drehbetätigung des Zahnrades durch die Öffnung in der Umfangswand des Rohrelements zur Erleichterung der Montagearbeit mittels eines motorgetriebenen Werkzeugs erfolgen kann.

Die Erfindung betrifft neben dem Montagesystem, das z.B. ein Möbelsystem sein kann, auch eine Profilleiste zur Verwendung bei einem derartigen Möbelsystem oder allgemein Montagesystem. Ein solches Montagesystem mit Profilleiste sowie die entsprechende Profilleiste ist auch von eigenständiger erfinnderischer Bedeutung, d.h., es bzw. sie kann auch ohne die übrigen vorstehend behandelten Merkmale bei Montagesystemen, wie z.B. Möbelsystemen eingesetzt werden, solange aus Rohrelementen Rahmen oder GEstelle aufgebaut und darin Plattenelemente eingesetzt werden.

In der DE 35 23 155 A1 ist ein Möbelsystem beschrieben, bei dem Möbel, wie Regale, Verkaufsständer, Stellagen, Gerüste und dergleichen, aus Rohrelementen aufgebaut werden können. Die Rohrelemente werden zu Rahmen zusammengebaut, in die bedarfsgemäß Plattenelemente eingesetzt werden können.

Bei derartigen auch aus der Praxis bekannten Möbelsystemen müssen die Plattenelemente teilweise in einen einseitig noch offenen Rahmen eingeschoben werden, bevor das letzte Rohrelement zur Vervollständigung des entsprechenden Rahmens angebracht wird, da die Rohrelemente zur formschlüssigen Halterung in die Umfangsseiten der Plattenelemente eingreifen. Dadurch wird die Aufbauplanung von damit zu erstellenden Möbeln wesentlich erschwert. Ferner ist es nicht ohne zumindest teilweisen Abbau von mittels diesem bekannten System aufgebauten Möbeln möglich, Plattenelemente zu entfernen, hinzuzufügen oder auszutauschen.

Aus der Praxis ist es ferner bekannt, metallische Plattenelemente mit umgebogenen, geringfügig federnden Seitenwänden zu verwenden, die in komplett zusammengebaute Rahmen eingeschnappt werden können. Abgesehen von dem nicht unbeachtlichen Kraftaufwand zum Einsetzen und Herausnehmen von solchen Plattenelementen aus den jeweiligen Rahmen, wird durch diese Bauart bei jedem Einsetzen oder Herausnehmen eines Plattenelements in einen bzw. aus einem Rahmen das Material von Rohr- und Plattenelementen und insbesondere deren Oberflächen stark strapaziert, was zu Abnutzungen und sogar Beschädigungen führen kann. Ferner werden die federnden Seitenwände der Plattenelemente beim Einsetzen in einen Rahmen möglicherweise unelastisch verformt, wodurch die Passung und Halterung des entsprechenden Plattenelements in dem Rahmen verschlechtert wird. Infolge einer Materialabnutzung oder einer Verformung kann außer einer mangelnden Halterung solcher Plattenelemente in ihren Rahmen auch eine unzureichende Fixierung der Plattenelemente auftreten, so daß diese Spiel haben und wackeln, was beispielsweise bei einem Regalboden oder einer Tischplatte sehr unangenehm ist. Schließlich führt ein häufiges Einsetzen und Herausnehmen der Plattenelemente in einen bzw. aus einem Rahmen zu einem Verschleiß der Plattenelemente, die dann unbrauchbar werden und insgesamt durch neue Plattenelemente ersetzt werden müssen.

Durch die Erfindung wird somit ferner ein Montagesystem sowie eine Profilleiste dafür geschaffen, um die vorerwähnten Nachteile zu beheben, so daß z.B. Möbel einfachen und kostengünstig aufzubauen und zu verändern sind.

Erfindungsgemäß wird somit ein Möbelsystem geschaffen, bei dem aus Rohrelementen Rahmen aufbaubar sind, in die Plattenelemente einsetzbar sind. Zum Übergang zwischen den Rohrelementen eines Rahmens und einem darin einsetzbaren Plattenelement ist wenigstens eine Profilleiste vorgesehen. Die Profilleisten sind so ausgelegt, daß sie für einen festen, spielfreien Halt der Plattenelemente in ihren Rahmen sorgen. Dies und die Weiterbildungen davon, zu denen nachfolgend nähere Angaben gemacht werden, stellt, wie bereits dargelegt, unabhängig von den übrigen weiter oben behandelten Merkmalen des Montagesystems auch eine selbständige Erfindung dar.

Bei dem Montagesystem nach der Erfindung können in aus Rohrelementen gebildete Rahmen Plattenelemente zum Aufbau von beispielsweise Möbeln, wie Regalen, Verkaufsständern, Stellagen, Gerüsten, Tischen, Stühlen, Schränken und dergleichen, eingesetzt werden. Z.B. sind an den Plattenelementen zumindest abschnittsweise und bevorzugt umlaufend Profilleisten angebracht, die insbesondere einen Querschnitt haben, der einerseits an die gekrümmte Rohrelement-Umfangswand und andererseits an die Form der Seitenwand der Plattenelemente angepaßt ist.

Durch die von den Plattenelementen getrennte Ausführung der Profilleisten kann das Material der letzteren so gewählt werden, daß beim Aufbau und Abbau der und bei Änderungen an den entsprechenden Möbel(n) Beschädigungen an den Plattenelementen selbst und an den Rohrelementen vermieden werden. Sollte im Laufe der Zeit eine Materialermüdung der Profilleisten auftreten, so können diese einfach und kostengünstig separat ersetzt werden.

Die Profilleisten weisen vorzugsweise zumindest in einem Querschnittsabschnitt eine Elastizität auf. Dadurch ist es möglich, die Plattenelemente ohne große Anstrengung in vollständig geschlossene Rahmen einzusetzen und daraus herauszunehmen, was den Aufbau und Änderungsarbeiten von bzw. an mittels des erfindungsgemäßen Möbelsystems geschaffenen Möbeln erleichtert. Dabei kommt es nicht darauf an, ob die Profilleisten an den Rohrelementen oder an dem Plattenelement vor deren Zusammenbau angebracht sind oder nachträglich eingesetzt werden. Der elastische Abschnitt ist bei den Einsetzarbeiten so ausgelegt, d.h. zusammendrückbar, und angeordnet, daß relativ mühelos das Plattenelement mit der/den Profilleiste(n) in den Rahmen, das Plattenelement in den Rahmen mit daran innen angebrachter/-n Profilleiste(n) oder die Profilleiste(n) zwischen den Rahmen und das Plattenelement eingesetzt werden kann.

Um bei diesen und anderen Anwendungsformen des Montagesystems einen schönen und ggf. dichten Übergang zwischen den Rohrelementen und den Plattenelementen zu gewährleisten, werden die Profilleisten insbersondere (auch) als Dichtelemente verwendet, die auch zum Abdecken und vorzugsweise Abdichten von Öffnungen in den Umfangswänden der Rohrelemente dienen können. Mittels des erfindungsgemäßen Möbelsystems können durch das Dichtelement oder die Dichtelemente dichte Räume hergestellt werden.

Gegenüber den beiden eingangs geschilderten bekannten Bauarten hat das Möbelsystem nach der Erfindung dadurch den weiteren Vorteil, daß durch die Profilleisten eine dichte Anlage des Plattenelementumfangs an die Rohrlementwände der Rahmen ermöglicht wird. So können z.B. auch Arzneimittelschränke oder sogar Klimaschränke oder Absaugkabinen ausreichend dicht aufgebaut werden. Ferner wird durch die erfindungsgemäßen Dichtelemente gerade z.B. beim Einsatz von mittels des Möbelsystems aufgebauten Krankenhaus- oder Praxismöbeln verhindert, daß sich zwischen den Rohr- und den Plattenelementen nur schwer oder nicht entfernbarer Schmutz ansammeln kann.

Wird die Erfindung zusammen mit Rohrelementen verwendet, in deren Umfangswänden Öffnungen enthalten sind, so können die Profilleisten so angeordnet und ausgebildet sein, daß sie diese Öffnungen überdecken. Dadurch wird erreicht, daß die Öffnungen in der Umfangswand der Rohrelemente einerseits nicht das Design stören und andererseits nicht schwer zu reinigende Stellen bilden. Eventuell können die Profilleisten auch Verschlußstopfen für solche Öffnungen in integraler oder getrennter Bauweise enthalten.

Die Profilleisten oder Dichtelemente können an den Rohrelementen oder ggf. vorzugsweise an den Plattenelementen fest oder lösbar angeordnet sein. Eine weitere Möglichkeit besteht darin, die Profilleisten zwischen die zueinander bereits ausgerichteten und ggf. durch Hilfsmittels zumindest vorübergehend lagemäßig festgelegten Rohr- und Plattenelemente einzufügen.

Nachfolgend werden noch weitere vorzugsweise Ausgestaltungen der Profilleiste angeegben.

So kann der bezüglich des elastischen Abschnittes übrige Teil der Profilleiste eine größere Härte und/oder Formstabilität aufweist als der elastische Abschnitt, und/oder der elastische Abschnitt der Profilleiste kann durch eine gegenüber den restlichen Teil der letzteren größere Weichheit und/oder eine elastisch wirkende Form gebildet sein, wobei vorzugsweise der Härteunterschied zwischen dem elastischen Abschnitt der Profilleiste und deren restlichem Teil durch die jeweiligen Materialeigenschaften und/oder Zusammensetzungen der jeweiligen Materialien erreicht ist.

Der Härteunterschied zwischen dem elastischen Abschnitt der Profilleiste und deren restlichem Teil kann durch einen Nut erreicht sein, der in dem elastischen Abschnitt der Profilleiste in deren Längsrichtung verläuft. Vorzugsweise ist der Nut zumindest bei in den Rahmen eingesetztem Plattenelement mit dazwischenliegender Profilleiste zumindest im wesentlichen dicht verschließbar und/oder aufspreizbar, wobei insbesondere zum Verschließen und/oder Aufspreizen des Nuts ein in den Nut einsetzbarer Keder oder eine Verschlußlippe insbesondere integral an einer den Nut bildenden ersten Lippe der Profilleiste vorgesehen ist, wobei vorzugsweise die Verschlußlippe über ein Filmscharnier oder eine Materialdünnstelle mit der ersten Lippe verbunden ist, und oder wobei bevorzugt an einer zweiten den Nut bildenden Lippe der Profilleiste eine Wulst als nutinnenseitiges Widerlager für die Verschlußlippe vorgesehen ist.

Ferner kann mit Vorzug vorgesehen sein, daß die Profilleiste zur Befestigung an einem Plattenelement an ihrer letzterem zugewandten Seite eine Montageleiste oder wenigstens einen Montagezapfen aufweist, die bzw. der in eine entsprechende Ausnehmung, wie einen Montagenut oder eine Montagebohrung, in den Seitenwänden des Plattenelements einsetzbar ist. Bevorzugt weist die Montageleiste oder der Montagezapfen einen tannenbaumartig geformten Querschnitt auf.

Ebenfalls bevorzugt ist es, wenn die den Rohrelementen des Rahmens zugewandte Seite der Profilleiste an die Form der Umfangswand eines Rohrelements angepaßt ist, um insbesondere einen Formschluß damit zu ermöglichen.

Weitere vorteilhafte und bevorzugte Ausgestaltungen ergeben sich aus den abhängigen Ansprüchen und deren Kombinationen.

Die Erfindung wird nachfolgend zur weiteren Erläuterung anhand von Ausführungsbeispielen unter Bezugnahme auf die Zeichnung näher beschrieben, in der:
- Figur 1: eine Seitenansicht einer Ausführung eines Rohrelements des Montagesystems zeigt,
- Figur 2: eine gegenüber der Darstellung von Figur 1 um 90° gedrehte Seitenansicht des Rohrelements des Montagesystems ist,
- Figur 3: eine Querschnittsansicht des Rohrelements des Montagesystems mit einem angesetzten Plattenelement und einer ersten Ausführung eines Dichtelements in Form einer Profilleiste zeigt,
- Figur 4: eine Seitenansicht einer ersten Ausführung von Verbindungseinrichtungen ist,
- Figur 5: eine Darstellung des Rohrelements nach den Figuren 1 bis 3 und der ersten Ausführung der Verbindungseinrichtungen nach der Figur 4 in zerlegtem Zustand ist,
- Figur 6: einen schematischen Längsschnitt durch die in der Figur 5 gezeigten Teile im zusammengebauten Zustand darstellt,
- Figur 7: schematisch eine Draufsicht auf zwei T-förmig miteinander verbundene Rohrelemente gemäß der ersten Ausführung zeigt,
- Figur 8: eine perspektivische Darstellung einer Betätigungsschraube einer zweiten Ausführung der Verbindungseinrichtungen ist,
- Figur 9: eine perspektivische schematische Darstellung einer Betätigungsschraube einer dritten Ausführung der Verbindungseinrichtungen zusammen mit einem geeigneten Werkzeug zum Drehen der Schraube zeigt,
- Figur 10: eine perspektivische schematische Darstellung einer Betätigungsschraube einer vierten Ausführung der Verbindungseinrichtungen mit einem geeigneten Werkzeug zum Drehen der Schraube ist,
- Figur 11: einen schematischen Längsschnitt durch eine zweite Ausführung des Rohrelements des Montagesystems mit einem Axialschlitzabschnitt darstellt,
- Figur 12: eine Prinzipskizze einer Betätigungsschraube mit integrierter Handhabe einer fünften Ausführung der Verbindungseinrichtungen ist,
- Figur 13: eine Prinzipskizze einer Betätigungsschraube mit einer Umlenkeinrichtung einer sechsten Ausführung der Verbindungseinrichtungen zeigt,
- Figur 14A und 14B: eine Darstellung einer Klemmvorrichtung einer siebten Ausführung der Verbindungseinrichtungen in einem entspannten bzw. in einem gestauchten Zustand ist,
- Figur 15: eine Darstellung einer Klemmvorrichtung einer achten Ausführung der Verbindungseinrichtungen ist,
- Figur 16: eine Darstellung einer Klemmvorrichtung einer neunten Ausführung der Verbindungseinrichtungen ist,
- Figuren 17A bis 17H: schematisch dargestellte Beispiele von mit dem Montagesystem aufbaubaren Tischen in perspektivischer Darstellung sind,
- Figuren 18A bis 18H: schematisch dargestellte Beispiele von mit dem Montagesystem aufbaubaren Schränken in perspektivischer Darstellung sind,
- Figur 19A und 19B: ein schematisch dargestelltes Beispiel einer mit dem Montagesystem aufgebauten Schrankwand in Front- und Seitenansicht ist,
- Figuren 20A bis 20C: Beispiele von mit dem Montagesystem aufbaubaren Gerätewägen in perspektivischer Darstellung sind,
- Figuren 21A bis 21B: schematisch dargestellte Beispiele von mit dem Montagesystem aufbaubaren Gerätewägen in Seitenansicht sind,
- Figur 22: eine perspektivische Darstellung einer Laboreinrichtung zeigt, die aus dem Montagesystem aufgebaut ist,
- Figur 23: eine perspektivische Darstellung einer Büroeinrichtung zeigt, die aus dem Montagesystem aufgebaut ist,
- Figur 24: eine Unteransicht eines Knotenelements mit einem montierten Rohrelement und angebrachten Verbindungseinrichtungen darstellt,
- Figur 25: eine schematische Ansicht eines Anschlusses eines Plattenelements an ein Rohrelement mit einer zweiten Ausführung eines Dichtelements in Form einer Profilleiste ist,
- Figur 26: eine schematische Querschnittsansicht eines Anschlusses eines Plattenelements an ein Rohrelement mit einer dritten Ausführung einer Profilleiste ist,
- Figur 27: eine schematische Querschnittsansicht eines Anschlusses eines Plattenelements an ein Rohrelement mit einer vierten Ausführung einer Profilleiste ist,
- Figur 28: eine schematische Querschnittsansicht eines Anschlusses eines Plattenelements an ein Rohrelement mit einer fünften Ausführung einer Profilleiste ist, und
- Figur 29: eine schematische Querschnittsansicht eines Anschlusses eines Plattenelements an ein Rohrelement mit einer sechsten Ausführung einer Profilleiste ist.

In den in den Zeichnungen dargestellten Ausführungsbeispielen und der darauf bezogenen Beschreibung bezeichnen gleiche Bezugszeichen durch alle Figuren hindurch identische oder funktionsgleiche Teile, so daß auch im Zusammenhang mit den Darstellungen die jeweiligen Teile und ihre Funktion für den Fachmann ohne weiteres verständlich ist, auch wenn nicht zu jeder Abbildung alle darin mit Bezugszeichen versehenen Teile im einzelnen beschrieben sind. Insbesondere ermöglichen die Zeichnungen dem Fachmann auch ein problemloses Erkennen von Teilen und deren Funktionen, auch wenn diese nicht explizit in der nachfolgenden Beschreibung erläutert sind.

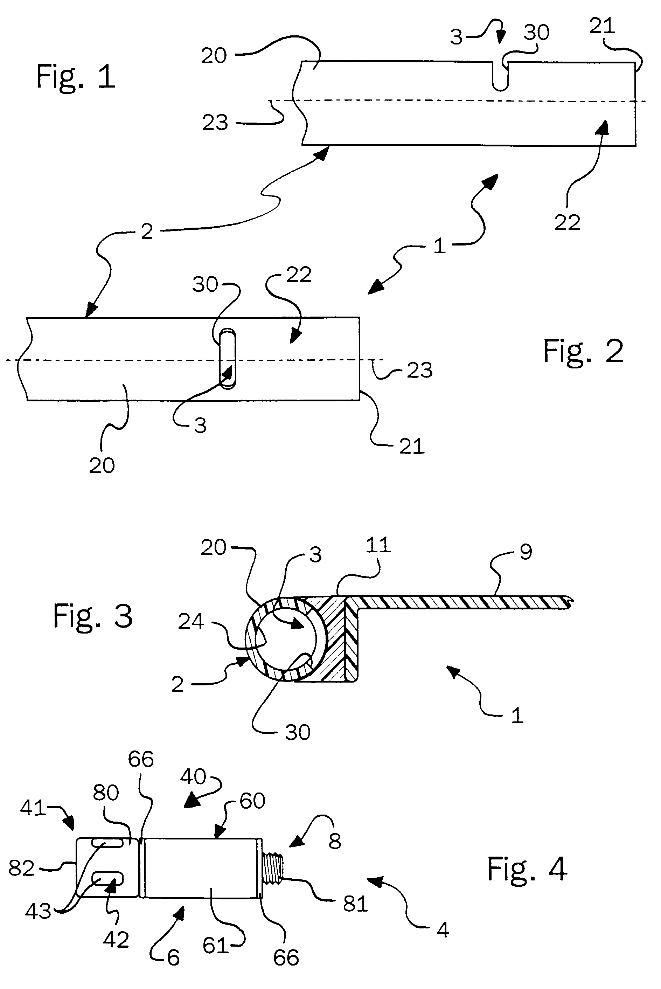

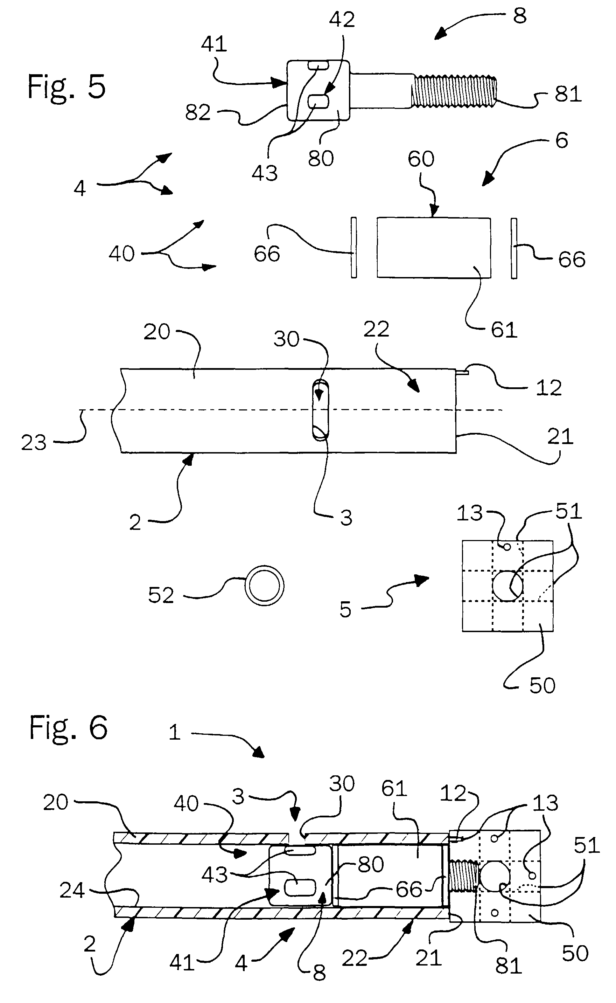

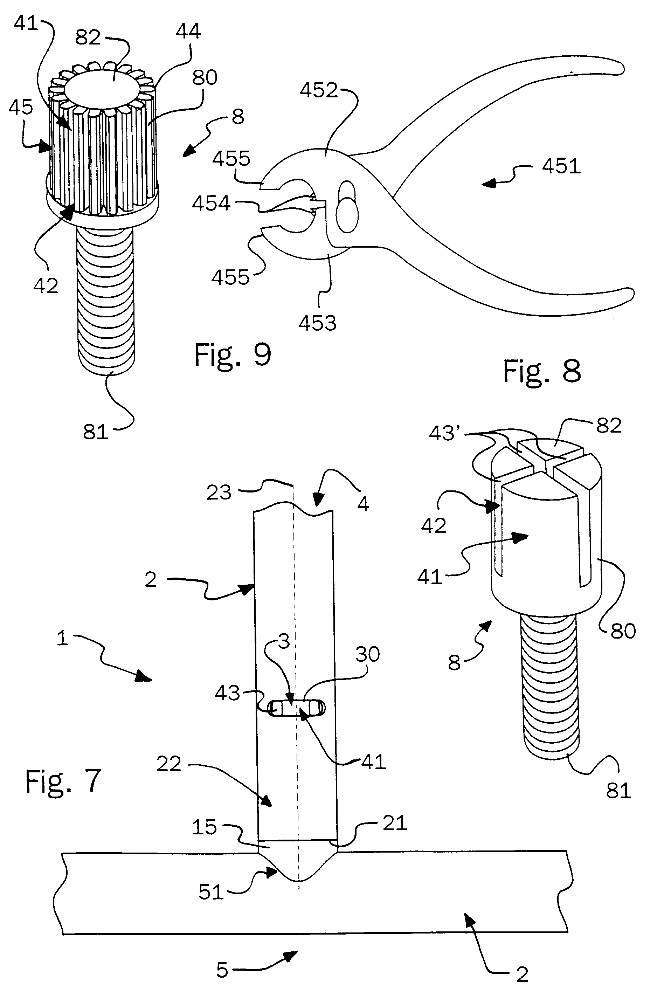

In den Figuren 1, 2 und 3 ist ein Rohrelement 2 eines Montagesystems 1 in einer Seitenansicht, einer Draufsicht bzw. einer Querschnittsansicht gezeigt. Das Rohrelement 2 hat in seiner Umfangswand 20 eine Öffnung 3 in Form eines Umfangsschlitzabschnitts 30, der quer zur Rohrelementachse 23 verläuft. Der Umfangsschlitzabschnitt 30 ist im Endbereich 22 des Rohrelements 20 in einem solchen Abstand von dessen axialen Ende 21 angeordnet, daß ein Betätigungsende 41 einer Arretiervorrichtung 40 (siehe Figur 4) durch den Umfangsschlitzabschnitt 30 zugänglich und betätigbar ist, wie die Figuren 6 und 7 erkennen lassen. Das Rohrelement 2 besteht aus Metall, könnte aber in Abstimmung auf die erforderliche Haltbarkeit und Stabilität unter Berücksichtigung eines gewünschten Designs auch aus Kunststoff oder Holz oder einer Materialkombination bestehen.

Verbindungseinrichtungen 4 zum Anschließen des Rohrelements 2 an einen Gegenstand 5, wie einem anderen Rohrelement 2, einer Wand oder einem Knotenelement 50 des Montagesystems 1 sind in der Figur 4 in einer Seitenansicht gezeigt. Die Verbindungseinrichtungen 4 enthalten die Arretiervorrichtung 40 mit dem Betätigungsende 41. Die Verbindungseinrichtungen 4 sind mit dem Betätigungsende 41 ihrer Arretiervorrichtung 40 voraus in das Rohrelement 2 einschiebbar, wie dies in der Figur 6 zu sehen ist.

Die Arretiervorrichtung 40 enthält eine durch Betätigung ihres Betätigungsendes 41, das bei der in den Figuren 4 bis 6 gezeigten Ausführung durch den Kopf 80 einer Schraube 8 gebildet ist, in Umfangsrichtung radial aufweitbare Klemmvorrichtung 6, mittels der die Arretiervorrichtung 40 zumindest gegen Kräfte in Richtung gegen ein Herausziehen der Arretiervorrichtung 40 aus dem Rohrelement 2 in letzterem kraftschlüssig, beispielsweise durch Reibschluß, lösbar festgelegt werden kann.

Das Betätigungsende 41 der Arretiervorrichtung 40 enthält für einen formschlüssigen Ansatz eines Werkzeugs in dem Schraubenkopf 80 vier Eingriffsvertiefungen 42 in Form von Radialbohrungen 43, von denen bei in das Rohrelement 2 eingesetzter Arretiervorrichtung 40 durch die Öffnung 3 bzw. den Umfangsschlitzabschnitt 30 in der Umfangswand 20 des Rohrelements 2 zum Ansetzen des Werkzeugs zwei zugänglich sind, wie anhand der Figuren 6 und 7 deutlich wird. Als Werkzeug kann entsprechend der Ausgestaltung der Eingriffsvertiefungen 42 bei dieser Ausführungsform z.B. ein einfacher Stift (nicht gezeigt) verwendet werden, der in die Radialbohrungen 43 paßt.

Zur Betätigung der Arretiervorrichtung 40 muß also lediglich ein Stift, wie ein Stahlstift (nicht gezeigt), der zur besseren Handhabbarkeit auch in bekannter Weise mit einem ergonomisch geformten Griff versehen sein kann, in eine der durch den Umfangsschlitzabschnitt 30 zugängliche Radialbohrungen 43 eingesetzt werden. Dann kann mittels des Stiftes (nicht gezeigt) der Schraubenkopf 80 im Rahmen der Abmessungen des Umfangsschlitzabschnitts 30 gedreht werden.

Wird die Schraube 8 auf diese Weise in eine Richtung gedreht, bis der Stift (nicht gezeigt) ein Ende des Umfangsschlitzabschnitts 30 erreicht hat, so kann der Stift (nicht gezeigt) in die andere Radialbohrung, die gleichzeitig durch den Umfangsschlitzabschnitt 30 zugänglich ist, gesteckt werden, so daß wieder die gesamte Länge des Umfangsschlitzabschnitts 30 zur weiteren gleichsinnigen Drehung der Schraube 8 zur Verfügung steht. Selbstverständlich kann die Schraube 8 auch in der gleichen Art in der anderen Richtung gedreht werden.

Sind die Verbindungseinrichtungen 4 mit dem Betätigungsende 41 der Arretiervorrichtung 40 voraus koaxial in das Rohrelement 2 eingesetzt, so kann die zur Betätigung der Klemmvorrichtung 6 der Arretiervorrichtung 40 fungierende Schraube 8 somit zum Festlegen und Freigeben der Arretiervorrichtung 40 in dem Rohrelement 2 und zum Verbinden der Verbindungseinrichtungen 4 mit dem Gegenstand 5 in Umfangsrichtung des Rohrelements 2 gedreht werden. Dazu ist die Lage der Öffnung 3 bzw. des diese bestimmenden Umfangsschlitzabschnittes 30 im Endbereich 22 des Rohrelements 2 so gewählt, daß sie bzw. er in einem auf das in das Rohrelement 2 eingesetzte Betätigungsende 41 der Arretiervorrichtung 40 abgestimmten Abstand vom axialen Ende 21 des Rohrelements 2 angeordnet ist. Dann kann das Betätigungsende 41 der Arretiervorrichtung 40 in der oben beschriebenen Weise durch den Umfangsschlitzabschnitt 30 hindurch betätigt werden.

Um die Verbindungseinrichtungen 4 über ihre Arretiervorrichtung 40 in dem Rohrelement 2 festzulegen, ist bei der Ausführung der Figuren 4 bis 6 die durch die Schraube 8 verstellbare Klemmvorrichtung 6 vorgesehen. Außer der Schraube 8 mit ihrem radial durchbohrten Kopf 80 enthält die Klemmvorrichtung 6 noch ein rohrförmiges Elastikelement 60, das durch einen Gummischlauch 61 gebildet ist, und zwei Beilagscheiben 66 an den offenen Enden des Gummischlauchs 61 (siehe Figur 5). Die Schraube 8 ist der Reihe nach durch die erste Beilagscheibe 66, dann durch den elastischen Schlauch 61 und schließlich durch die zweite Beilagscheibe 66 hindurchgesteckt, wie anhand der Figur 4 zu erkennen ist.

Durch den elastischen Schlauch 61 ist ein Reibschluß der Klemmvorrichtung 6 mit dem Rohrelement 2, wenn die Arretiervorrichtung wie in Figur 6 koaxial in das Rohrelement 2 eingeführt ist möglich. Dies erfolgt durch Drehbetätigung des Betätigungsendes 41 der Arretiervorrichtung 40, indem die Schraube 8 durch den in eine Radialbohrung 43 ihres Kopfes 80 eingesteckten Stift (nicht gezeigt) gedreht wird. Um dadurch nun eine radiale Aufweitung des elastischen Schlauchs 61 gegen die Innenwand 24 des Rohrelements 2 zu erreichen, muß der Schlauch 61 zwischen den beiden Beilagscheiben 66 zusammengedrückt werden.

Dies erfolgt z.B. dann, wenn ein über die schaftseitige zweite Beilagscheibe 66 vorstehendes freies Ende 81 des Gewindes der Schraube 8 in eine Gewindebohrung 51 eines Gegenstandes 5, wie beispielsweise eines Knotenelements 50, eingeschraubt wird. Damit dabei der Schlauch 61 nicht verdreht oder verdrillt wird, sind die Beilagscheiben 66 vorgesehen. Durch das Schrauben der Schraube 8 zum Gegenstand 5 hin wird der Schlauch 61 axial in Achsenrichtung 23 des Rohrelements 2 und wegen seiner Elastizität reversibel gestaucht und dehnt sich unter Bildung einer zentralen Ausbauchung in seinem Mittelbereich aus, bis er an der Innenwand 24 des Rohrelements 2 anliegt. Wird die Schraube 8 in der gleichen Weise weitergedreht, so preßt sich der Mittelbereich, der gleichzeitig auch axial immer länger wird, immer fester gegen diese Innenwand 24. Der dadurch erreichbare Kraft- oder Reibschluß hält die Verbindungseinrichtungen 4 fest und sicher in dem Rohrelement 2.

Die Länge, Elastizität, Materialstärke und andere physikalische Eigenschaften des Schlauchs 61 können im Rahmen des fachmännischen Könnens ohne weiteres optimiert werden, um zumindest eine gegen ein Herausziehen der Klemmvorrichtung 6 aus dem Rohrelement 2 in dessen Achsenrichtung 23 ausreichende Haltekraft bei der jeweils beabsichtigten Anwendung zu gewährleisten. Der Schlauch 61 kann statt aus Gummi auch aus einem anderen Material, wie beispielsweise Kunststoff oder Federstahl sein.

Die Elastizität des Schlauchs 61 bringt außer der einfachen und sicheren Herstellbarkeit des Kraft- oder Reibschlusses noch den Vorteil, daß das Elastikelement 60 beim Lösen der Verbindung bzw. Arretierung durch Drehen der Schraube 8 in die andere Richtung bezüglich der Feststellbewegung automatisch und zuverlässig in eine ungeklemmte Stellung zurückkehrt, in der die Arretiervorrichtung 40 axial frei in dem Rohrelement 2 verschiebbar ist. D.h., daß die Verbindungseinrichtungen 4 dann problemlos von dem Rohrelement getrennt werden können.

Die Ausführung des Schlauchs 61 aus Gummi hat ferner den Vorteil, daß ein guter Haft- oder Reibschluß zwischen der Gummmioberfläche des Schlauchs 61 und der Innenwand 24 des Rohrelements 2 erreicht wird. Dieser Vorteil kann aber alternativ auch durch Elastikelemente 60 mit entsprechenden Beschichtungen auf der Außenseite oder auch andere Materialien und Materialkombinationen realisiert werden.

Die beiden Beilagscheiben 66 bringen ebenfalls noch einen weiteren Vorteil neben ihrer Funktion zur Verhinderung eines Mitdrehens oder Verdrillens des elastischen Schlauchs 61 beim Drehen der Schraube 8. Dadurch, daß der Außendurchmesser der beiden Beilagscheiben 66 ebenso wie des Schraubenkopfs 80 nur geringfügig kleiner als der Innendurchmesser des Rohrelements 2 ist, wird durch den Schraubenkopf 80 und die beiden Beilagscheiben 66 eine sichere axiale Führung der Arretiervorrichtung 40 bzw. deren Klemmvorrichtung 6 innerhalb des Rohrelements 2 erreicht, so daß ein Verkippen oder Verkanten der Klemmvorrichtung 6 innerhalb des Rohrelements 2 vermieden wird.

Wie bereits vorstehend zur Erklärung der Funktion der Arretiervorrichtung 40 bzw. deren Klemmvorrichtung 6 beschrieben wurde, wird das Rohrelement 2 des Montagesystems 1 gemäß dem vorliegenden Ausführungsbeispiel über eine Verschraubung durch Drehbetätigung am Betätigungsende 41 der Schraube 8 an einem Gegenstand 5, wie dem Knotenelement 50 (siehe Figuren 5 und 6) oder an einem anderen Rohrelement 2 (siehe Figur 7) befestigt. Die Schraube 8 hat eine solche Länge, daß ihr freies Gewindeende 81 über die aufgesteckten Komponenten erste Beilagscheibe 66, elastischer Schlauch 61 und zweite Beilagscheibe 66 vorsteht. Dieses Gewindeende kann problemlos durch Drehen der Schraube 8 in der oben beschriebenen Weise in eine Gewindeöffnung 51 eines Gegenstandes 5 eingeschraubt werden, um das Rohrelement 2 über die Verbindungseinrichtungen 4 an dem Gegenstand 5 zu befestigen.

Um trotz einer Axialbewegung der Schraube 8 beim Einschrauben oder Herausschrauben in ein bzw. aus einem Gewindeloch 51 sicherzustellen, daß die Eingriffsvertiefungen 42 immer durch den Umfangsschlitzabschnitt 30 in der Umfangswand 20 des Rohrelements 2 für ein Werkzeug, wie den erwähnten Stift (nicht gezeigt), zugänglich sind, können z.B. die Radialbohrungen 43 eine Länge in Achsenrichtung entsprechend dieser Axialbewegung der Schraube 8 haben, d.h. als Langlöcher ausgebildet sein. Alternativ können aber statt der Radialbohrungen 43 auch beispielsweise zwei Endschlitze 43' (Figur 8) vom freien Ende 82 des Schraubenkopfes 80 in diesen mit einer entsprechenden axialen Länge eingebracht sein. Eine weitere Möglichkeit zum Sicherstellen einer ausreichenden Bewegungsfreiheit und gleichzeitigen Betätigbarkeit der Schraube besteht darin, den Umfangsschlitzabschnitt 30 in Richtung der Rohrelementachse 23 ausreichend lang auszuführen. Die Länge der Radialbohrungen 43 oder der Endschlitze 43' oder die Dicke des Umfangsschlitzabschnittes 20 in Richtung der Rohrelementachse 23 muß jedenfalls so bemessen sein, daß sie einem durch die Betätigung des Betätigungsendes 41 der Arretiervorrichtung 40 in Umfangsrichtung des Rohrelements 2 bewirkbaren Reaktionsweg der Arretiervorrichtung 40 in Richtung der Rohrelementachse 23 zum Montieren des Rohrelements 2 durch die Verbindungseinrichtungen 4 an einem Gegenstand 5 entspricht.

Zwei Eingriffsvertiefungen 42 im Umfang des Betätigungsendes 41 der Arretiervorrichtung 40 sind bei der vorstehend beschriebenen Ausführungsform ausreichend, wenn sie in Umfangsrichtung einen derartigen Abstand haben, daß sie beide gleichzeitig durch die Öffnung 3 bzw. den Umfangsschlitzabschnitt 30 zugänglich sind. Andererseits muß sich dann der Umfangsschlitzabschnitt 30 über mehr als 180° erstrecken.

Bevorzugte Längen des Umfangsschlitzabschnitts 30 gemessen im Winkelmaß sind daher höchstens etwa 180°, wobei eben die zwei Eingriffsvertiefungen 42 gleichzeitig zugänglich sein müssen, oder wenigstens ungefähr 30°, wofür eine entsprechende Anzahl und Anordnung von Eingriffsvertiefungen 42 erforderlich ist, damit eine fortgesetzte Drehung z.B. der Schraube 8 ermöglicht wird. Besonders bevorzugt ist es, wenn sich der Umfangsschlitzabschnitt 30 über maximal etwa 120° der Umfangswand 20 des Rohrelements 2 erstreckt, so daß drei Eingriffsvertiefungen 42 ausreichen, und bis minimal ca. 60° diese Umfangs einnimmt, womit sechs Eingriffsvertiefungen 42 ausreichend sind. Bei den Ausführungsbeispielen, die in den Figuren 4 bis 7 bzw. in der Figur 8 gezeigt sind, ist das Winkelmaß des Umfangsschlitzabschnitts auf etwas mehr als 90° festgelegt, so daß immer zwei von vier Radialbohrungen 43 bzw. Eingängen der Endschlitze 43' in der Umfangswand des Schraubenkopfes 80 durch den Umfangsschlitzabschnitt 30 gleichzeitig zugänglich sind.

Wenn der Schraubenkopf 80 mit einer Zahnung 44 versehen ist, wie dies bei der weiteren in der Figur 9 dargestellten Ausführungsform der Fall ist, kann mit einer relativ kleinen Öffnung 3 gearbeitet werde, da die Zahnung 44 des somit als Zahnrad 45 ausgebildeten Schraubenkopfes 80 eine verhältnismäßig kleine Teilung bereitstellt, die in kleinen Winkelabständen einen formschlüssigen Eingriff eines Werkzeugs 451 erlaubt, wie es z.B. ebenfalls in der Figur 9 gezeigt ist. Das Werkzeug 451 ist als Zange ausgebildet, die an jedem Arm 452, 453 eine zur Zahnung 44 passende Zahnausbildung 454 sowie zwei Greifer 455 enthält. Die beiden Zahnausbildungen 454 schließen unter Fortsetzung des Zahnungsmusters bei geschlossener Zange 451 aneinander an und können, wenn das Rohrelement 2 mit der Zange 451 geeignet gefaßt wird, durch die Öffnung 3 bzw. den Umfangsschlitzabschnitt 30 in die Zahnung 44 des Schraubenkopfes 80 eingreifen. Die beiden Greifer 455 fassen dabei dann um das Rohrelement 2 gleichsam als Führung und Abrutschsicherung herum. Ist bei einer Arbeitsdrehbewegung der Schraube 8 mit diesem Werkzeug 451 ein Ende der Öffnung 3 in Umfangsrichtung des Rohrelements 2 erreicht, so braucht die Zange 451 nur geöffnet, entgegen der Arbeitsdrehbewegung bis zum anderen Ende der Öffnung 3 in Umfangsrichtung des Rohrelements 2 versetzt und dann wieder geschlossen werden, um die Ausdehnung des Öffnung 3 in Richtung der Arbeitsdrehbewegung wieder voll zur Verfügung zu haben. Zur Erleichterung dieses Ablaufes kann die Zange 451 in ihre Offenstellung vorgespannt sein.

Alternativ zur Zange 451 kann auch ein motorangetriebenes Hilfsmittel, wie beispielsweise ein Akkuschrauber mit einem entsprechenden Zahnradeinsatz (nicht gezeigt) verwendet werden, der zum Zahnrad 45 der Schraube 8 paßt und aus Sicherheitsgründen eine Abdeckung haben kann, die gleichzeitig als Ansatzhilfe zum Positionieren und Halten des Akkuschraubers dienen kann.

Die Ausbildung des Schraubenkopfes 80 als Zahnrad 45 ermöglicht besonders einfach eine ausreichende Länge der Zahnung 44 in Richtung der Rohrelementachse 23.

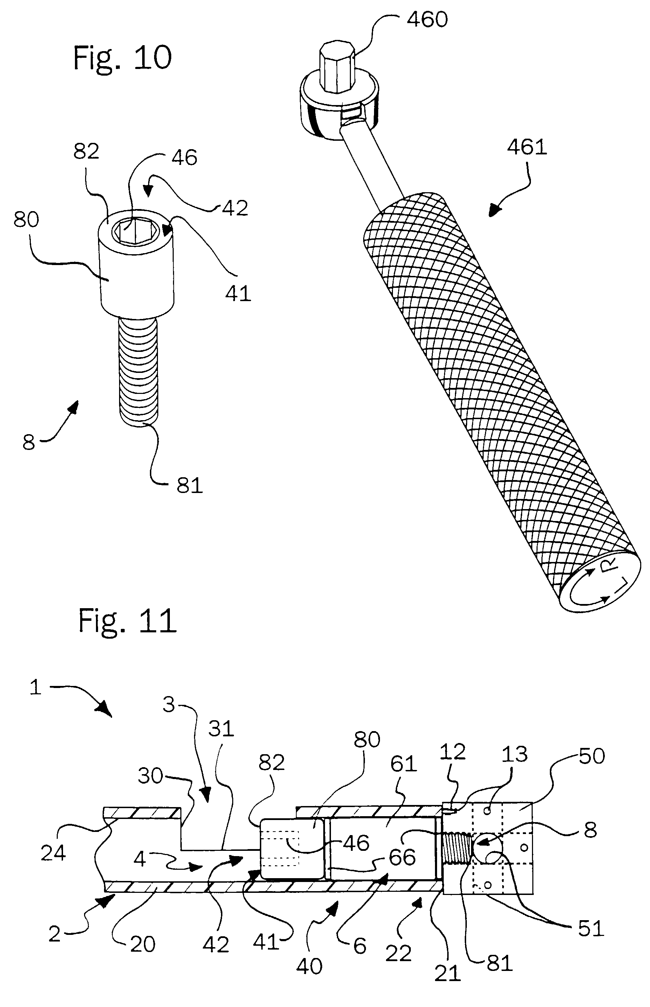

Eine weitere Möglichkeit zur Betätigung z.B. einer Schraube 8 als Funktionselement der Verbindungseinrichtungen 4 besteht darin, den Schraubenkopf 80 in herkömmlicher Weise mit einer Imbus-, Torax-, Schlitz-, Kreuzschlitz- o.ä. Ausgestaltung auszustatten. In der Figur 10 ist als Beispiel eine Sechskant-Imbusausgestaltung 46 gezeigt. Zur Betätigung einer derartigen Schraube 8 kann ein übliches Werkzeug, wie im gezeigten Fall ein Imbusschlüssel 460, verwendet werden, wie er ebenfalls in der Figur 10 schematisch dargestellt ist. Um diesen Imbusschlüssel 460 ins Innere des Rohrelements 2 einführen zu können, ist ein Axialschlitzabschnitt 31 vorgesehen, der zusammen mit dem Umfangsschlitzabschnitt 30 eine T-Form bildet oder, wie die Figur 11 z.B. im Vergleich mit der Figur 6 zeigt, eine axiale Verlängerung des gesamten Umfangsschlitzabschnittes 30 ist. Der Ausgleich der Axialbewegung der Schraube 8 kann durch eine ausreichende Länge oder Tiefe des Sechskantloches im freien Ende 82 des Schraubenkopfes 80 der Schraube 8 gewährleistet werden, die in der Figur 11 gestrichelt eingezeichnet ist, so daß der Imbusschlüssel 460 immer ausreichend in das Imbusloch 46 eingreift, auch wenn die Schraube 8 in Achsenrichtung 23 des Rohrelements 2 hin- und hergeschraubt wird. Die schraubenseitige Kante des Umfangsschlitzabschnittes 30 bildet dabei zugleich immer eine sichere Anlage zur Führung der Schraubbewegung.

Um den Imbusschlüssel 460 nicht am Ende des Umfangsschlitzabschnittes 30 vollständig aus der Imbusausbildung 46 der Schraube 8 herausnehmen zu müssen, enthält er eine Knarren- oder Ratscheneinrichtung mit umschaltbarer Arbeitsrichtung. Die Umschaltmöglichkeit, die durch einen Doppelpfeil und "L" für Linksdrehung sowie "R" für Rechtsdrehung in der Figur 10 angedeutet ist, ist vorzugsweise bei auf die Schraube 8 aufgestecktem Werkzeug außerhalb des Rohrelements 2. Wenn keine Ratscheneinrichtung 461 verwendet wird, muß der Axialschlitzabschnitt 31 in Umfangsrichtung des Rohrelements 2 möglichst die gleiche Ausdehnung wie der Umfangsschlitzabschnitt 30 haben, um das Werkzeug 460 zuverlässig an dem Schraubenkopf 80 in jeder dessen Drehstellungen ansetzen zu können.

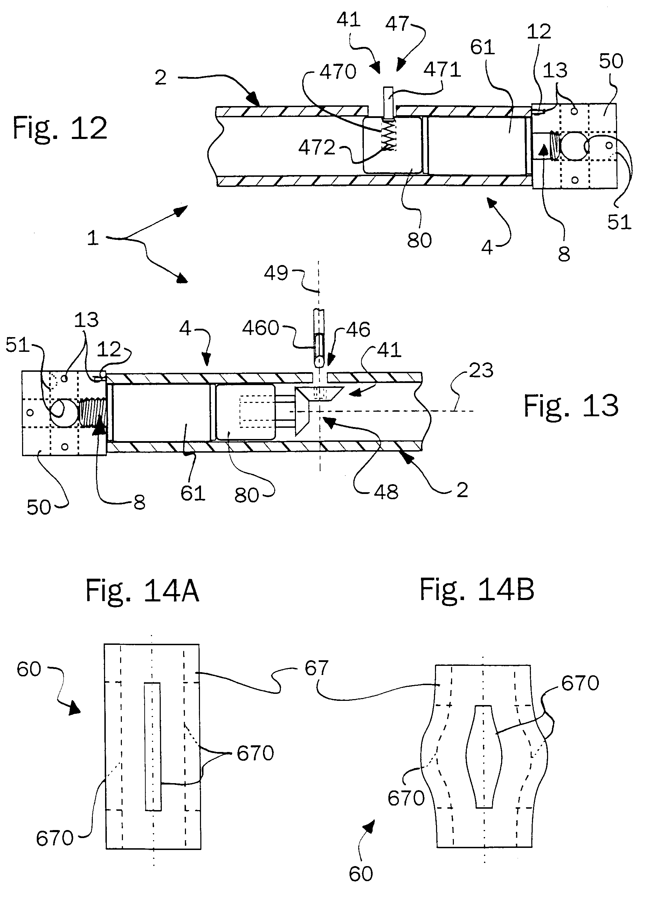

Als weitere Alternative zur Betätigung der Verbindungseinrichtungen kann das Betätigungsende 41 der Arretiervorrichtung 40 einen Handhabe 47 haben, die bei in das Rohrelement 2 eingesetzter Arretiervorrichtung 40 durch die Öffnung 3 in der Umfangswand 20 des Rohrelements 2 zugänglich ist. Bei der in der Figur 12 schematisch dargestellten Realisierung dieses Ausführungsbeispiels ist in einem Radial-Sackloch 470 im Betätigungsende 41 ein Betätigungsstift 471 als Handhabe 47 eingesetzt, der durch eine Feder 472 aus dem Radial-Sackloch 470 herausgedrückt wird, sobald letzteres mit der Öffnung 3 in der Umfangswand 20 des Rohrelements 2 zur Deckung kommt.

Bei dieser Ausführung ist kein gesondertes Werkzeug erforderlich, um die Verbindungseinrichtungen 4 zu betätigen. Da jedoch hierbei keine vollen Umdrehungen des Betätigungsendes 41 durchgeführt werden können, sondern die Drehmöglichkeit des Betätigungsendes 41 auf den Winkelbereich des Umfangsschlitzabschnittes 30 beschränkt ist, muß sowohl die Betätigung der Arretiervorrichtung 40 als auch das Herstellen der Verbindung zwischen den Verbindungseinrichtungen 4 und einem Gegenstand 5 mit einem entsprechend kurzen Bewegungsweg zu bewerkstelligen sein. Dafür eignet sich beispielsweise ein Bajonettverschluß sowohl zwischen Rohrelement 2 und Arretiervorrichtung als auch zwischen Verbindungseinrichtungen 4 und Gegenstand 5, wie schematisch in der Figur 12 dargestellt ist, wobei die hier dargestellte Ausführungsform mit Ausnahme der vorstehend erläuterten Merkmale mit denen beispielsweise der Figuren 6 und 11 übereinstimmt, so daß in der Darstellung der Figur 12 aus Gründen der Übersichtlichkeit auf die Angabe einiger Bezugszeichen verzichtet wurde, wobei die entsprechenden Teile ohne weiteres durch Vergleich mit den Figuren 6 und 11 ersichtlich sind. Eine Beschreibung dieser mit früheren Ausführungsvarianten übereinstimmenden Teile und Bezugszeichen hier in der Beschreibung erübrigt sich damit.

Als weitere gestalterische Möglichkeit, oder wenn für die Betätigung in Umfangsrichtung des Rohrelements 2 in einer aufgebauten Teil- oder Gesamtkonstruktion nicht genügend Platz ist, kann auch eine Umlenkvorrichtung 48 in den Verbindungseinrichtungen 4 enthalten sein, die zur Betätigung der letzteren eine zur Rohrelementachse 23 senkrechte Drehachse 49 schafft. Das Prinzip dieser Ausführungsform ist in der Figur 13 schematisch dargestellt. Die Umlenkvorrichtung 48 besteht im wesentlichen aus einem Winkelgetriebe, das ggf. mit einer ausreichenden Längsausgleichsmöglichkeit in der Rohrelementachse 23, wie beispielsweise beim oben geschilderten Beispiel der Imbusverbindung, an einem Schraubenkopf 80 angebracht ist, um die Längsbewegung der Schraube 8 in dieser Richtung ausgleichen zu können. Es ist aber auch möglich, eine entsprechende Umlenkvorrichtung am Werkzeug vorzusehen. Die übrigen Merkmale ergeben sich analog z.B. den Figuren 6 und 11, so daß die weiteren Teile und Bezugszeichen in der Figur 13 sowie deren Erläuterung hier im Zusammenhang mit der Figur 13 weggelassen wurden.

Daß der Außendurchmesser des Betätigungsendes 41 der Arretiervorrichtung 40 vorzugsweise zu Führungszwecken eine geringfügig kleinere Abmessung als der Innendurchmesser des Rohrelements 2 hat, wurde bereits weiter oben erläutert. Bei den bisher beschriebenen Ausführungsbeispielen ist darüber hinaus vorgesehen, daß das Betätigungsende 41 der Arretiervorrichtung 40 eine axiale Länge hat, die größer als die axiale Ausdehnung der Öffnung 3 in der Umfangswand 20 des Rohrelements 2 ist. Damit wird die Schwächung des Rohrelements 2 durch die Öffnung 3 ausgeglichen, so daß das Rohrelement 2 auch im Bereich seiner Öffnung 3 zumindest dieselbe Stabilität und Steifigkeit wie in seinem übrigen Längenverlauf hat.

Zwar ist es in den Figuren der Zeichnungen nicht gezeigt, jedoch können in beiden axialen Endbereichen 22 des Rohrelements 2 jeweils eine Öffnung 3 in der Umfangswand 20 des Rohrelements 2 vorgesehen sein. Dadurch kann das Rohrelement mit seinen beiden Enden in gleicher Weise an einem Gegenstand 5, wie z.B. einem Knotenelement 50 (siehe Figur 5), befestigt werden. Aus Gründen des Designs und der Handhabung ist es vorteilhaft, wenn die beiden Öffnungen 3 in der Umfangswand 20 des Rohrelements 2 auf einer Linie parallel zur Rohrelementachse 23 miteinander ausgerichtet sind. In manchen Fällen kann es aber hilfreich sein, insbesondere um eine gute Zugänglichkeit der Öffnung 3 in der Umfangswand 20 des Rohrelements 2 bei bestimmten Einbaulagen des letzteren zu ermöglichen, wenn die beiden Öffnungen 3 in der Umfangswand 20 des Rohrelements 2 in dessen Umfangsrichtung insbesondere um 90° oder um 180° gegeneinander versetzt sind.

Ohne Einschränkung kann das vorliegende Montagesystem 1 nicht nur beispielsweise zur T-Verbindung, sondern auch zur koaxialen Verbindung von zwei Rohrelementen verwendet werden, wobei die Arretiervorrichtung dann gleichzeitig in beiden Rohrelementen steckt. Damit eine solche Verbindung auch eine Zugbelastung übersteht, empfiehlt sich, wenn eine derartige Belastungsmöglichkeit vorgesehen ist, eine entsprechende formschlüssige Verriegelung anstatt oder zusätzlich zu einer reinen Klemmung der beiden Rohrelemente. Wird eine Schraube als Betätigungselement verwendet, so wird als Gegenstück eine Gewindemutter benötigt, die beispielsweise durch die Öffnung im zweiten Rohrelement gegen ein Verdrehen gesichert werden kann, wenn die Schraube angezogen oder gelöst wird. Natürlich kann eine Mutter auch direkt drehfest in einem Rohrelement befestigt sein.

Die Figuren 14A und 14B zeigen eine siebte Ausführung der Verbindungseinrichtungen 4. Ein Hohlzylinder 67 aus elastischem Material hat einen geringfügig kleineren Außendurchmesser bezüglich des Innendurchmessers des Rohrelements 2 und ist beabstandet von seinen Enden mit vier Längsschlitzen 670 versehen. Wird dieser Hohlzylinder 67 gestaucht, wenn er beispielsweise zwischen zwei an seinen Stirnseiten angelegten Scheiben durch Krafteinwirkung zusammengedrückt wird, so wölben sich die Mantelflächenabschnitte zwischen den Schlitzen 670 nach außen. Die Funktion und Wirkung ist insofern gleich denen des früher beschriebenen elastischen Schlauchs 61. Zusätzlich kann aber z.B. ein gegen ein Verdrehen der Verbindungseinrichtungen 4 in dem Rohrelement 2 dazwischen wirkender Formschluß durch entsprechende Schultern in der Rohrelement-Innenwand 24 erreicht werden, der nur hergestellt wird, wenn sich die Mantelflächenabschnitte zwischen den Schlitzen 670 nach außen wölben. Damit kann z.B. auch eine definierte Ausrichtung von beispielsweise zwei Verbindungseinrichtungen an den beiden Enden 21 eines Rohrelements 2 einfach und sicher bewerkstelligt werden. Der geschlitzte Hohlzylinder 67 kann bei entsprechender Materialauswahl auch eine Verbindungsherstellung mit nur geringem Kraftaufwand unter gleichzeitig hohem Reibungswiderstand ermöglichen.

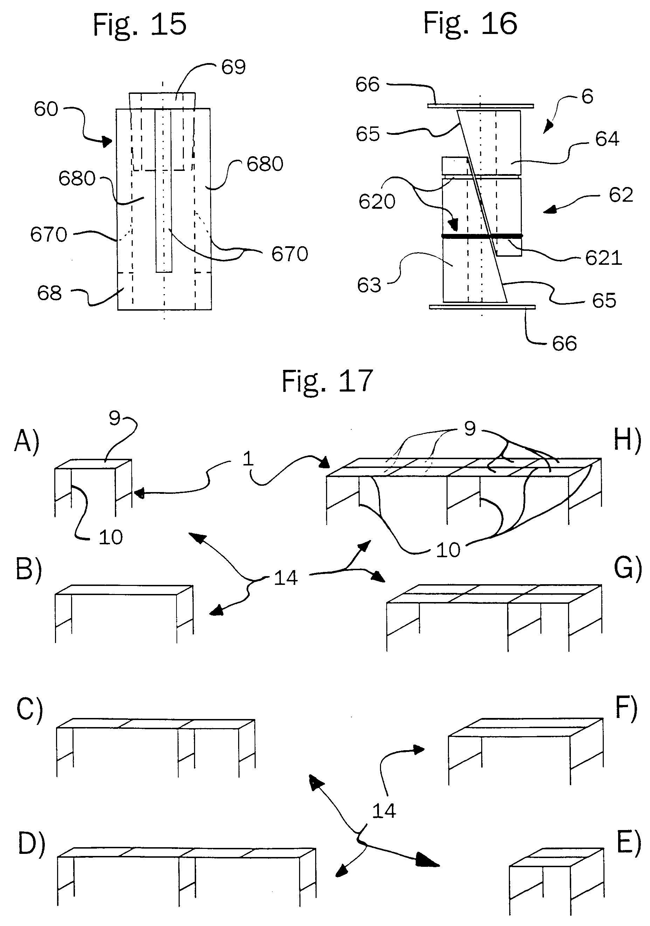

Bei einer weiteren Ausführungsform der Verbindungseinrichtungen 4, die in der Figur 15 dargestellt ist, ist eine Hülse 68 vorgesehen, die durch einen Kegel 69 an einem Ende aufgespreizt werden kann, um eine Klemmung mit der Innenwand 24 des Rohrelements 2 zu erzielen. Die Hülse 68, die beispielsweise eine Kunststoffhülse aus Nylon oder anderen Materialien sein kann, ist einseitig von einer Öffnungsseite her vierfach geschlitzt, so daß ein Kegelkörper 69 in dieses Ende hineingedrückt, die durch die Schlitzung gebildeten Flügel 680 auseinanderdrückt. Auch hier kann eine sehr hohe Paßgenauiggkeit erreicht werden, da die Hülse 68 nur sehr wenig kleiner im Außendurchmesser gehalten werden kann, als der Innendurchmesser des Rohrelements 2. Der zur Durchführung einer Schraube (nicht gezeigt) durchbohrte Kegelkörper 69, der z.B. aus Metall besteht, kann Stege (nicht gezeigt) entsprechend der Schlitzung der Hülse 68 enthalten, so daß eine Relativverdrehung zwischen Hülse 68 und Kegel 69 verhindert wird, da die Stege des Kegels 69 in den Schlitzen der Hülse 68 geführt werden, wenn sich die Hülse 68 und der Kegel 69 axial relativ zueinander bewegen. Der Kegel 69 kann auch im ungespreizten Zustand der Hülse 68 vollständig innerhalb der letzteren stecken. Lediglich als weiteres Beispiel für eine Gestaltung einer Klemmvorrichtung 6 der Arretiervorrichtung 40 der Verbindungseinrichtungen 4 zeigt die Figur 16 einen unter Bildung von Rampenflächen 65 schräg geteilten zweiteiligen Zylinder 62, der durch Drehbetätigung des Betätigungsendes 41 der Arretiervorrichtung 40 unter Aufweitung in Richtung eines Durchmessers des Zylinders 62 über die Rampenflächen 65 gegen die Innenwand 24 des Rohrelements 2 reversibel axial zusammenschiebbar ist. Die beiden identischen Hälften 63, 64 des Zylinders 62 haben in ihrer der Grundstellung, in der der Zylinder 62 frei in dem Rohrelement verschiebbar ist, miteinander ausgerichtete Nute 620, in die je ein Federstahlring 621 (nur einer ist gezeigt) eingesetzt ist. Diese Federstahlringe 621 drängen die beiden identischen Teile 63, 64 des Zylinders 62 nach Wegfall einer die beiden Hälften 63, 64 aufeinander zu drängenden Kraft wieder in die Grundstellung. Für die Produktionskosten der Teile und die Wirkung der Klemmvorrichtung 6 ist es von Vorteil, wenn der Zylinder 62 aus zwei identischen Teilen 63, 64 besteht, die sich insbesondere durch einen schräg durch seine Grundflächen verlaufenden Schnitt ergeben. Die Identität der Teile 63, 64 ermöglicht höhere Stückzahlen und damit niedrigere Stückkosten. Der Verlauf des Schnitts durch dir Grundflächen schafft flache Rampenflächen 65, so daß nur wenig Kraft zum "Aufweiten" des Zylinders 62 benötigt wird.

In den Figuren 14A und B sowie 15 und 16 sind auch die Längsachsen der rohrförmigen Elemente 61, 62, 67 und 68 eingezeichnet, die im Einsatz als Klemmvorrichtung innerhalb eines Rohrelements 2 mit dessen Längsachse 23 zusammenfallen. Ferner zeigen die vorgenannten Abbildungen gestrichelt die Innenausgestaltung der rohrförmigen Elemente 61, 62, 67 und 68, woran erkennbar ist, daß durch ihre Rohrform eine Schraube oder ein Bolzen 8 axial durch sie hindurchgeführt werden kann.

Statt der bisherigen Realisierung der Festlegung der Arretiervorrichtung 40 in dem Rohrelement 2 kann auch vorgesehen sein, daß die Arretiervorrichtung 40 eine durch Betätigung ihres Betätigungsendes 41 in Umfangsrichtung betätigbare Verriegelungsvorrichtung (nicht gezeigt) enthält, mittels der die Arretiervorrichtung 40 zumindest gegen Kräfte in Richtung eines Herausziehens der Arretiervorrichtung 40 aus dem Rohrelement 2 in letzterem formschlüssig und lösbar festlegbar ist. Ähnlich zur Klemmvorrichtung früher beschriebener Ausführungsbeispiele kann die Verriegelungsvorrichtung durch Betätigung des Betätigungsendes 41 der Arretiervorrichtung 40 in Umfangsrichtung zu einer formschlüssigen Verbindung mit dem Rohrelement 2 radial aufweitbar sein. Eine andere Möglichkeit besteht in einer bereits oben erwähnten Bajonettverbindung der Arretiervorrichtung 40 mit dem Rohrelement 2.

Die zur Betätigung der Klemmvorrichtung 6 bzw. der Verriegelungsvorrichtung bisher alleinig beschriebene Schraube stellt nicht die einzige Realisierungsmöglichkeit dar. So kann auch ein Bolzen eventuell mit einer gewindeähnlichen Ausbildung vorgesehen sein, dessen Kopf das Betätigungsende 41 der Arretiervorrichtung 40 bildet.

Von Vorteil kann es ferner sein, wenn die Arretiervorrichtung 40 derart ausgebildet ist, daß zum Verstellen der Klemmvorrichtung 6 bzw. der Verriegelungsvorrichtung zwischen einem freien und einem arretierten Zustand der Arretiervorrichtung 40 in dem Rohrelement 2 maximal eine Umdrehung des Bolzens oder der Schraube 8 und vorzugsweise nur eine Teilumdrehung des Bolzens oder der Schraube 8 erforderlich ist.

Unabhängig von der Ausgestaltung mit einer Schraube oder einem Bolzen mit oder ohne Gewindeausbildung können die Verbindungseinrichtungen 4 durch Drehbetätigung am Betätigungsende 41 über eine Verschraubung an einem Gegenstand 5 festlegbar sein, wobei ggf. insbesondere der Bolzen oder die Schraube 8 zur Betätigung der Klemmvorrichtung 6 bzw. der Verriegelungsvorrichtung in den Gegenstand 5 eindrehbar, einrückbar oder einschraubbar ist. Es stehen alle Anschlußverbindungsmöglichkeiten zur Verfügung, so daß die Verbindungseinrichtungen 4 durch Drehbetätigung am Betätigungsende 41 auch über eine Klemmung oder Verriegelung an einem Gegenstand 5 festlegbar sind, wobei ggf. insbesondere die Klemmvorrichtung 6 bzw. die Verriegelungsvorrichtung der Arretiervorrichtung 40 zu deren Festlegung in dem Rohrelement 2 in einer Öffnung oder Bohrung 51 in dem Gegenstand 5 lösbar festlegbar ist.

In der Figur 5 ist beispielsweise ein Knotenelement 50 gezeigt, an dem das Rohrelement 2 anbringbar ist und der zum Montagesystem 1 gehört. Das Knotenelement 50 hat vorzugsweise die Form eines Würfels, eines Quaders oder einer Kugel und weist eine Mehrzahl von Bohrungen 51 zum Befestigen von Rohrelementen 2 mittels der Verbindungseinrichtungen 4 durch Verschraubung, Verriegelung oder Klemmung auf.

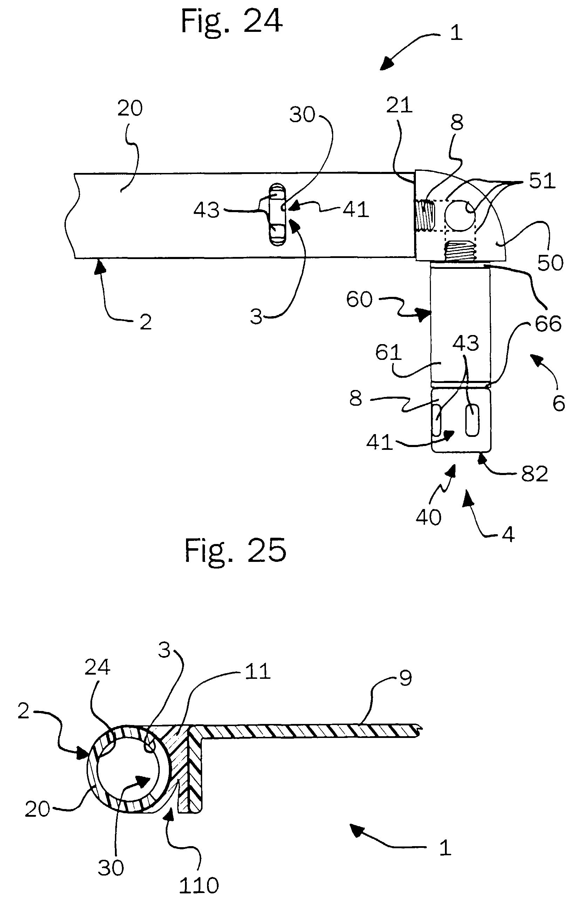

Da kein Werkzeug durch die Bohrungen 51 der Knotenelemente 50 hindurchgeführt werden muß, um ein Rohrelement 2 daran zu befestigen, muß keine maximal große Anzahl von Bohrungen 51 vorgesehen werden und letztere müssen auch nicht durch die Knotenelemente 50 hindurchgehen. Daher können entsprechend der Einbaulage der und den Montageanforderungen an die Knotenelemente 50 gestellten Anforderungen Knotenelemente 50 mit unterschiedlichen Anzahlen und/oder Anordnungen von Bohrungen 51 vorgesehen werden. Unnötige, beispielsweise eine schlecht zu reinigende Schmutzsammelstelle bildende Bohrungen oder Löcher 51 können in einem Regal oder Gestell 10 vermieden werden. In der Figur 24 ist gezeigt, daß ein Knotenelement 50 mit nur 3 Gewindebohrungen 51 verwendet wird, wobei an eine erste Bohrung 51 ein Rohrelement 2 mittels Verbindungseinrichtungen 4 angeschlossen ist, eine zweite Bohrung 51 nur mit Verbindungseinrichtungen 4 verbunden ist, und die dritte Bohrung 51 noch frei ist. Ein solches Knotenelement 50 kann beispielsweise an einer Ecke einer oberen Etage eines Regals oder an einer Ecke eines Tisches verwendet werden.

Sollten trotzdem Knotenelemente 50 mit einer möglichst großen Anzahl von Anschlußlöchern 51 eingesetzt werden, um für spätere Änderungen oder Erweiterungen möglichst flexibel zu bleiben, so können Verschlußmittel 52 (Figur 5) zum Verschließen von nicht zum Anbringen eines Rohrelements 2 benötigten Bohrungen 51 in einem Knotenelement 50 vorgesehen werden.

Das Montagesystem 1 enthält Rohrelemente 2 mit unterschiedlichen Längen, und insbesondere Längen in Vielfachen einer Grundlängeneinheit, um aus den Rohrelementen 2 oder ggf. aus den Rohr- und den Knotenelementen 2, 50 Möbel 14 aus Rahmen oder Gestellen 10 aufbauen zu können, die beispielhaft in den Figuren 17 bis 23 dargestellt sind. Zur Komplettierung der Möbel 14 sind in dem Montagesystem 1 Plattenelemente 9 enthalten, die in die Rahmen oder Gestelle 10 einsetzbar sind.

Die Figuren 17A bis 17H zeigen dabei Beispiele von mit dem Montagesystem 1 aufbaubaren Tischen in schematischer perspektivischer Darstellung mit vorzugsweisen Abmessungen:
Figur 17A: Einzelarbeitsplatz; B 174 cm, T 64 cm, H 83 cm;
Figur 17B: Zweierplatz; B 288 cm, T 64 cm, H 83 cm;
Figur 17C: Dreierplatz; B 402 cm, T 64 cm, H 83 cm;
Figur 17D: Viererplatz; B 516 cm, T 64 cm, H 83 cm;
Figur 17E: Zweier-Doppelplatz; B 174 cm, T 128 cm, H 83 cm;
Figur 17F: Vierer-Doppelplatz; B 288 cm, T 128 cm, H 83 cm;
Figur 17G: Sechser-Doppelplatz; B 402 cm, T 128 cm, H 83 cm;
Figur 17H: Achter-Doppelplatz; B 516 cm, T 128 cm, H 83 cm.

Lediglich exemplarisch und stellvertretend für die übrigen Abbildungen dieser Figur sind in den Darstellungen 17 A) und 17 H) Plattenelemente 9 sowie der jeweilige Rahmen oder das Gestell 10 bezeichnet, der bzw. das aus den Rohrelementen 2 gebildet ist.

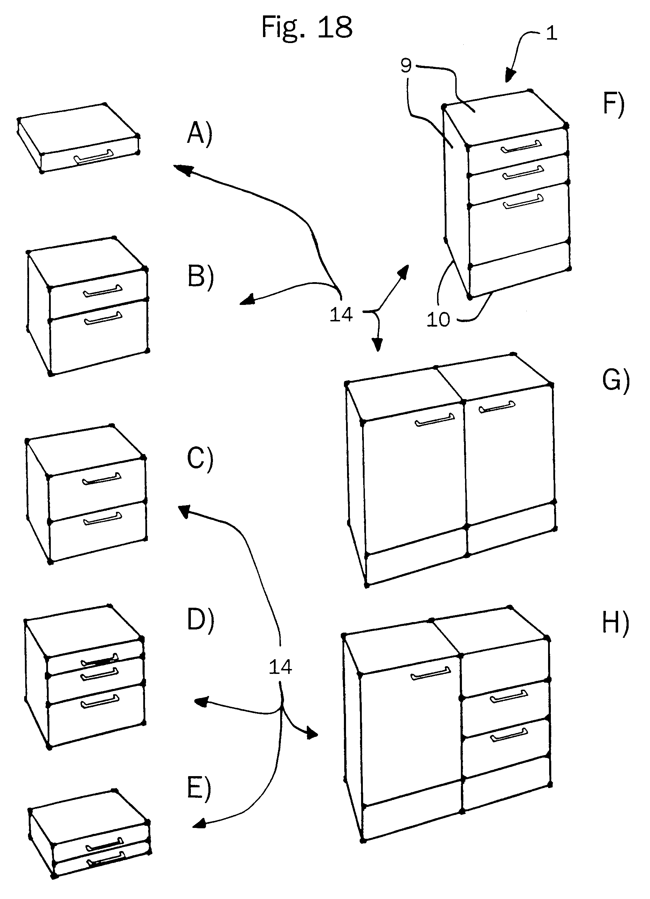

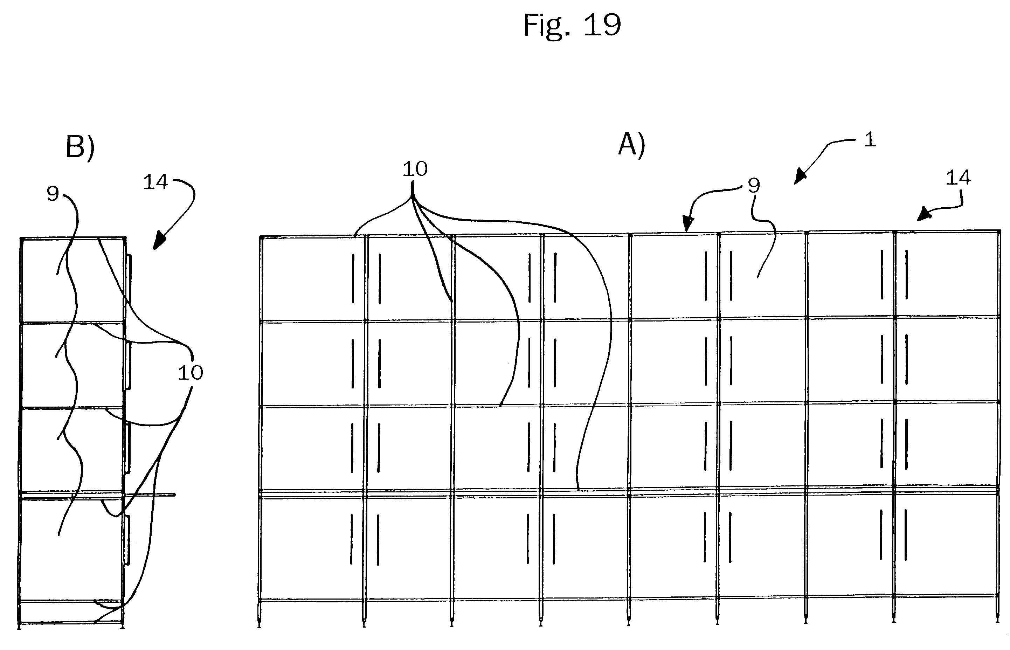

Über spezielle Elemente kann die Höhe z.B. der Tische individuell einstellbar sein. Die Modularbauweise erlaubt auf einfache Art beliebige Kombinationen von Grundbausteinen nicht nur bei Tischen, sondern auch bei anderen Möbeln einschließlich Betten und Sondermobiliar. Schrankelemente von der Größe eines Aktenkoffers als möglicherweise sogar mobile Einheit bis zu einer ganzen Schrankwand sind in den Figuren 18A bis 18H perspektivisch sowie in den Figuren 19A und 19B in Vorder- bzw. Seitenansicht gezeigt. Bezugszeichen sind hier ebenfalls lediglich stellvertretend an einigen Teilen angegeben, da sich die Zuordnungen bereits anhand der Abbildungen selbst ohne weiteres ergeben.

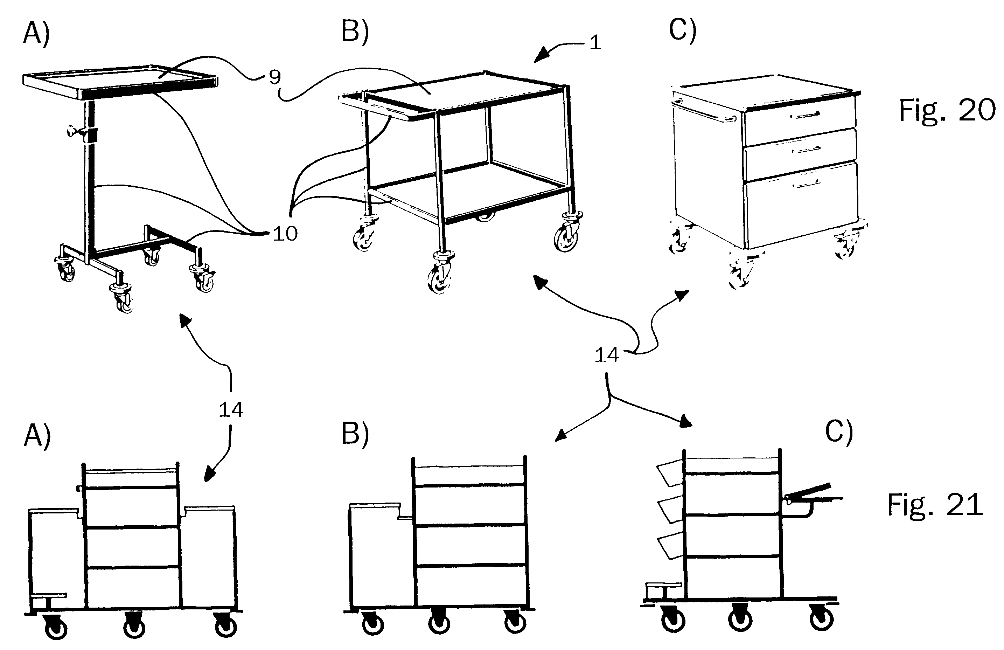

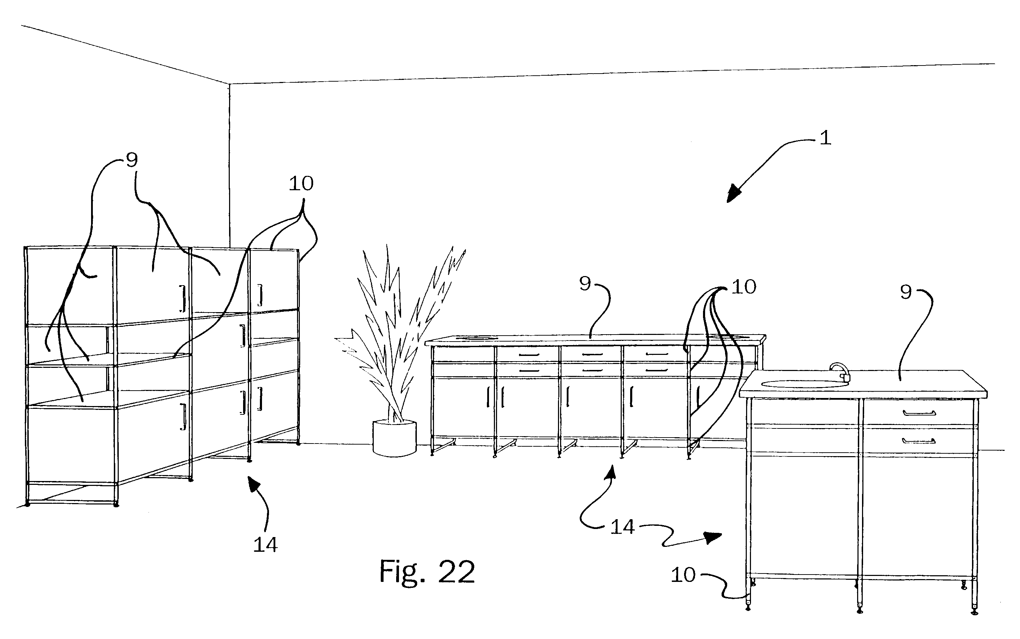

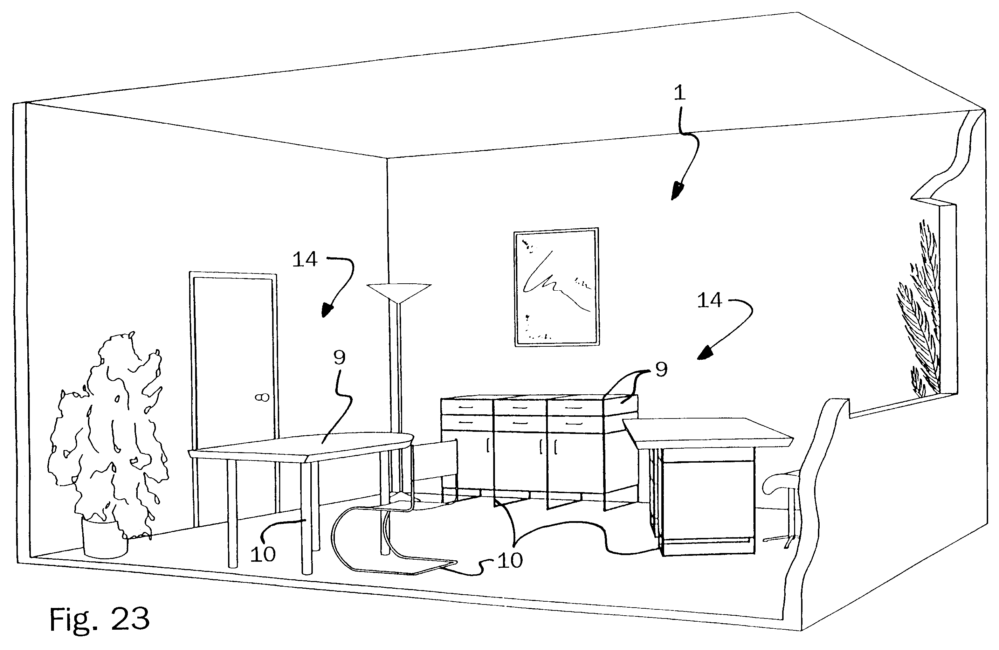

Die Figuren 20A bis 20C sind Beispiele von mit dem Montagesystem aufbaubaren Gerätewägen in perspektivischer Darstellung, und die Figuren 21A bis 21B sind schematisch dargestellte Beispiele von mit dem Montagesystem aufbaubaren weiteren Gerätewägen in Seitenansicht. Eine perspektivische Darstellung einer Laboreinrichtung, die aus dem Montagesystem aufgebaut ist, ist der Figur 22 zu entnehmen. Eine komplette Büroeinrichtung, die aus dem Montagesystem aufgebaut ist, ist in perspektivischer Darstellung in der Figur 23 gezeigt. Das Montagesystem ist insbesondere auch geeignet für Krankenhaus- und Schulmöbel, wo es auf eine gute Anpaßbarkeit an individuelle Gegebenheiten ankommt.

Durch Funktionselemente, die mit den Plattenelementen und/oder den Rohrelementen verbunden werden, lassen sich alle denkbaren Möbel mit z.B. Türen, Schubläden, Rollen, Höhenvertellungen sowie elektrischen Einrichtungen mit dem Montagesystem herstellen. Lediglich einige Beispiele derartiger Funktionselemente sind in den Zeichnungen dargestellt, ohne jedoch näher bezeichnet zu sein.

Um bei allen diesen und anderen Anwendungsformen des Montagesystems 1 einen schönen und ggf. dichten Übergang zwischen den Rohrelementen 2 und den Plattenelementen 9 zu gewährleisten, können ein Dichtelement oder Dichtelemente 11 zum Abdecken und vorzugsweise Abdichten der Öffnung oder Öffnungen 3 in der Umfangswand 20 des Rohrelements 2 vorgesehen sein, wie in den Figuren 3 und 7 gezeigt ist. Dabei kann das Dichtelement oder können die Dichtelemente 11 an dem Rohrelement 2 oder ggf. vorzugsweise an dem Plattenelement 9 angeordnet sein, wie in der Figur 3 gezeigt ist. Diese Dichtelemente 11 können sowohl eine Abdeckung der Öffnung(en) 3 in den Rohrelementen 2 bewirken, als auch den Übergang zwischen den Rohrelementen 2 untereinander als auch zu den Knotenelementen 50 und den Plattenelementen 9 ermöglichen.

Die Figur 25 zeigt ein bezüglich der Darstellung in der Figur 3 anderes Profil eines Dichtelements oder einer Profilleiste 11, wie es bzw. sie zwischen einem Rohrelement 2 und einem Plattenelement 9 verwendet werden kann. Im in der Zeichnung unteren Bereich des Dichtelements 11, das auch einen 90°-Umfangsschlitzabschnitt 30 abdeckt, ist ein Nut 110 vorgesehen, der das nachträgliche Einsetzen des Plattenelements 9 in einen fertigen Rahmen 10 aus Rohrelementen 2 erleichtert, indem durch den Nut 110 eine größere Nachgiebigkeit des Dichtelements 11 erzeugt wird. Abhängig vom Material des Dichtelements 11 und den Anforderungen beim Aufbau und bei der Anwendung kann das Dichtelement aber auch ein anderes Profil haben. Der übrige Teil der Profilleiste 11 hat bei dieser Ausführung eine höhere Festigkeit und Formstabilität als der elastische Abschnitt 115, um eine sichere Anlage an dem Rohrelement 2 zu bilden.

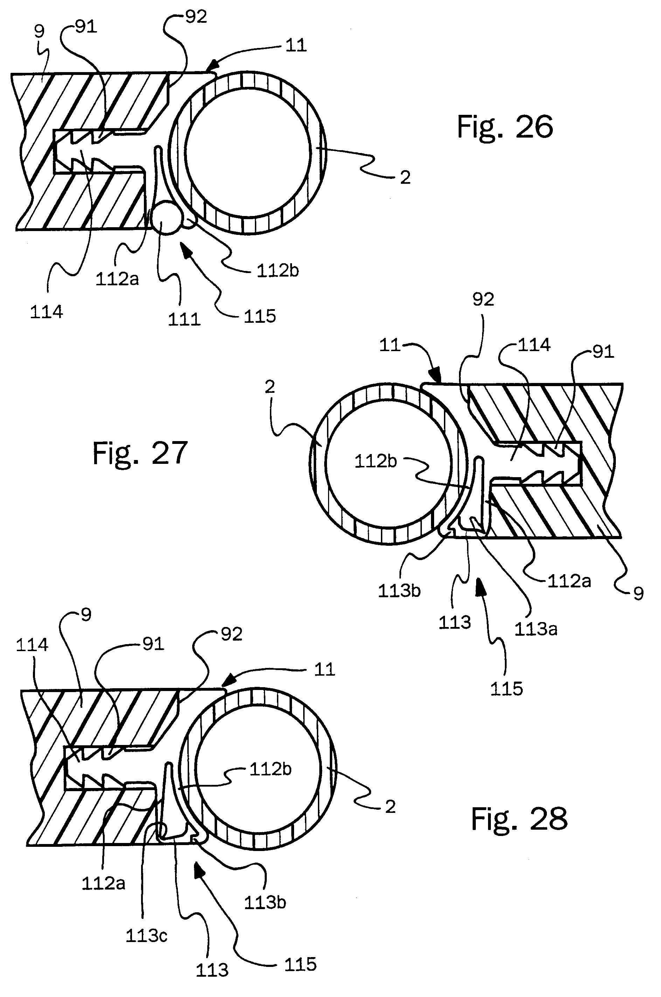

Die Figuren 26, 27, 28 und 29 zeigen im Querschnitt weitere dritte, vierte, fünfte und sechste Ausführungen der Profilleisten 11. Die Rohrelemente 2 haben dabei zumindest in der gezeigten Schnittebene keine Öffnungen 3, und die Plattenelemente 9 sind als massive Platten ausgeführt. Diese Ausführungen der Profilleisten 11 haben alle eine im Querschnitt tannenbaumförmige Montageleiste 114, die in einen Montagenut 91 in den Umfangsseiten oder Seitenwänden 92 der massiven Plattenelemente 9 hineingedrückt wird, um die Profilleiste 11 an dem Plattenelement 9 zu befestigen. Statt einer über die gesamte Länge der Profilleiste 11 verlaufenden Montageleiste 114 können auch einzelne beabstandete Montagezapfen (nicht gezeigt) analog vorgesehen sein, die in den Montagenut 91 oder entsprechende Montagelöcher (nicht gezeigt) in den Umfangs- oder Seitenflächen 92 des Plattenelements 9 hineingedrückt werden können. Zusätzlich zu oder statt dieser Befestigungsart kann mit Kleber, Schrauben, Nägeln usw. gearbeitet werden, um die Profilleiste 11 an dem Plattenelement 9 anzubringen. Die Verbindung der Profilleisten 11 mit den Plattenelementen 9 kann als dauerhafte oder als lösbare Befestigung ausgelegt sein.

Die dritte Ausführung, die in der Figur 26 dargestellt ist, ähnelt der zweiten Ausführung der Profilleiste 11 nach Figur 25. Jedoch ist gemäß Figur 26 ein Keder 111 in den Nut 110 in der Seitenfläche 92 des Plattenelements 9 eingesetzt. Der Keder 111 erfüllt dabei sowohl die Funktion einer Abdichtung des Nuts 110, als auch die Aufspreizfunktion für den Nut 110, so daß die Profilleiste 11 auch im Bereich des Nuts 110 dicht, sicher und fest an dem Rohrelement 2 anliegt. Der Keder 111 wird nach dem Einsetzen des Plattenelements in einen geschlossenen Rahmen 10 in den Nut 110 eingedrückt. Die beiden den Nut 110 bildenden Lippen 112a und 112b der Profilleiste 11 sind an ihren freien Enden so ausgebildet, daß der Keder 111, der eine Eigenelastizität aufweist, formschlüssig gehalten wird. Zum Herausnehmen des Plattenelements 9 aus dem Rahmen 10 wird zunächst der Keder 111 aus dem Nut 110 herausgezogen, und dann kann das Plattenelement 9 mit nur geringem Kraftaufwand problemlos aus dem Rahmen 10 herausgedrückt werden.

Die in der Figur 27 gezeigte vierte Ausführung der Profilleiste 11 weist ebenfalls den Nut 110 auf, der durch Lippen 112a und 112b der Profilleiste 11 gebildet wird. Jedoch ist hier eine Verschlußlippe 113 vorgesehen, die an der Lippe 112a über ein Filmscharnier 113a integral angeformt ist. Als Widerlager ist an der Lippe 112b eine Wulst 113b ebenfalls integral ausgebildet, so daß die Verschlußlippe 113 selbsttätig allenfalls in den Nut 110 hinein, nicht aber daraus heraus klappen kann. Ebenso wie der Keder 111 der dritten Ausführung dient die Verschlußlippe 113 dazu, den Nut 110 nach dem Einsetzen eines Plattenelements 9 in einen kompletten, d.h. geschlossenen Rahmen 10 zu verschließen und aufzuspreizen. Ggf. können das Material und/oder die Formgebung der Verschlußlippe 113, des Filmscharniers 113a und/oder der Wulst 113b die Verschlußlippe 113 in die in der Figur 25 gezeigte Verschlußstellung drängen oder vorspannen. Somit wird auch bei dieser vierten Ausführung ein dichter Übergang zwischen dem Plattenelement 9 und den dieses umgebenden Rohrelementen 2 und eine gute Haltewirkung des Plattenelements 9 in dem Rahmen 10 erreicht.

Die fünfte Ausführungsform der Profilleiste 11, die in der Figur 28 gezeigt ist, stimmt weitgehend mit der vorstehend beschriebenen vierten Ausführung überein. Die Profilleiste 11, die in der Figur 28 dargestellt ist, hat lediglich anstelle des Filmscharniers 113a eine Dünnstelle 113c, die durch eine Verschmälerung des Lippenquerschnittes der Lippe 112a beim Übergang zur Verschlußlippe 113 erreicht wird.

Bei der vierten und fünften Ausführung ist es ferner möglich, daß die Verschlußlippe 113 vor dem bestimmungsgemäßen Einsatz der Profilleiste 11, oder anders ausgedrückt vor dem Zusammendrücken der Profilleiste 11 zur Montage des Möbelsystems, aus dem Nut 110 herausgeklappt ist, so daß letzterer vollständig zusammengedrückt werden kann, bis sich die beiden Lippen 112a und 112b berühren. Wenn die Profilleiste 11 dann an ihrer endgültigen Position ist, wird die Verschlußlippe 113 umgeklappt und in den Nut 110 hineingedrückt, wo sie hinter der Wulst 113b verriegelt und so den Nut 110 in einer festen Stellung hält oder sogar spannt.

Die Profilleisten 11 und ggf. die Keder 111 bestehen vorzugsweise aus einem elastischen Material, wie einem Kunststoff oder Gummi oder einem Materialverbund daraus, eventuell mit weiteren die Profilleisten 11 insbesondere verstärkenden und/oder versteifenden Bestandteilen. Dabei kann die je nach erwünschter Funktion der Profilleisten 11 erforderliche Elastizität auch durch die Formgebung der Profilleisten 11 unterstützt werden.

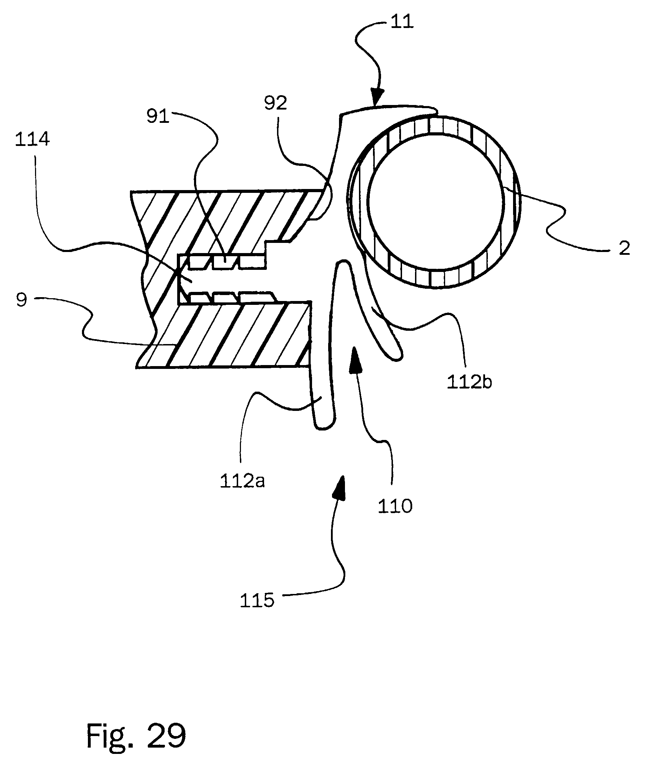

Die in der Figur 29 gezeigte sechste Ausführungsform unterscheidet sich von den vorbeschriebenen Versionen im wesentlichen dadurch, daß der Nut 110 unverschlossen bleibt, d.h., kein Keder 111 oder keine Verschlußlippe 113 vorgesehen sind. Dafür besteht jedoch der elastische Teil 115 dieser Profilleiste 11 aus weniger nachgiebigem Material, das dem elastischen Teil 115 selbst somit eine verglichen mit den in den Figuren 3 und 26 bis 28 gezeigten Ausgestaltungen größere Eigensteifigkeit verleiht. Die besagte sechste Ausführungsform ähnelt im Querschnitt dem zweiten Ausführungsbeispiel der Profilleiste 11 gemäß der Figur 25.

Wie anhand der Figur 29 zu erkennen ist, hat die Profilleiste 11 dieser Ausführung in der Dickenrichtung des Plattenelements 9 eine größere Abmessung als letzteres. Dies führt einerseits dazu, daß die freien Endbereiche der ersten und zweiten Lippen 112a und 112b über z.B. die Unterseite des Plattenelements 9 vorstehen und so leicht zu greifen oder zu drücken sind, um die Demontage des Plattenelements 9 aus einem Rahmen zu erleichtern. Andererseits liegt das Plattenelement mit seiner Oberseite gegenüber der obersten Stelle des Rohrelements 2 etwas tiefer, wobei durch diese abgesenkte Lage ein Trog entsteht, der insbesondere dann vorteilhaft ist, wenn vermieden werden soll, daß aus einem auf dem Plattenelement 9 abgestellten Behälter (nicht gezeigt) evtl. auslaufende Flüssigkeit über den Rand des Rohrelements 2 fließen kann. Somit wird durch einfaches Gestalten der Profilleiste 11 im Rahmen der Erfindung eine erweiterte Funktionalität erreicht.

Allen Profilleisten 11 gemäß den beschriebenen Ausführungsbeispielen ist gemeinsam, daß sie in ihrem in Einsetzrichtung eines Plattenelements 9 in einen Rahmen 10 liegenden Abschnitt 115 elastisch reversibel verformbar sind. Durch diese Elastizität wird einerseits ein problemloses Einsetzen eines Plattenelements 9 in einen Rahmen 10 ermöglicht, da der elastische Abschnitt 115 soweit zusammengepreßt werden kann, daß z.B. das Plattenelement 9 in seine Sollage im Rahmen 10 gedrückt werden kann. Das Herausnehmen eines Plattenelements 9 aus einem Rahmen 10 erfolgt entsprechend. Andererseits legt sich die Profilleiste 11 durch diese Elastizität nach dem Einsetzen des Plattenelements 9 in einen Rahmen 10 dicht an die Rohrelemente 2 und ggf. Knotenelemente 50 an, die den Rahmen bilden 10. Der übrige Teil der Profilleisten 11, d.h. der Teil, der nicht zwischen dem Plattenelement 9 und dem Rahmen 10 hindurchgedrückt wird, weist eine ausreichende Stabilität oder Festigkeit auf, um eine sichere Auflage zu bilden. Die Profilleiste 11 und damit auch das Plattenelement 9 stützt sich somit über diesen festeren Teil der Profilleiste 11 an dem Rahmen 10 ab. Der elastische Teil der Profilleiste 11 kann dann auf Grund seiner Elastizität und/oder Form zusätzlich dafür sorgen, daß die Profilleiste 11 und schließlich das Plattenelement 9 in eine vollständige Einsetzlage gedrängt und eventuelle sogar gespannt wird.

Bei den vorstehenden Erläuterungen wurde davon ausgegangen, daß die Profilleisten 11 an einem Plattenelement 9 angebracht werden, bevor letzteres in einen Rahmen 10 eingesetzt wird, was die bevorzugteste Ausgestaltung ist. Ohne Einschränkungen und mit denselben Vorteilen können die Profilleisten 11 aber auch an z.B. den Rohrelementen 2 und ggf. Knotenelementen 50 des Rahmens 10 angebracht werden, bevor ein Plattenelement 9 darin eingesetzt wird. In diesem Fall sollte dann der elastische Abschnitt 115 der Profilleisten 11 dem einzusetzenden Plattenelement 9 zugewandt sein, wobei ein Einsetzen des Plattenelements 9 grundsätzlich von jeder Seite der durch den Rahmen 10 gebildeten Öffnung her möglich ist. Ferner ist es dann vorteilhaft, wenn bei einer Ausführung des elastischen Abschnittes 115 der Profilleisten 11 mit einem Nut 110 dieser nach dem Einsetzen durch einen Keder 111 oder eine Verschlußlippe 113 o.ä. aufgespreizt wird, um die Festigkeit der Halterung des Plattenelements 9 in dem Rahmen 10 zu erhöhen.

Liegt das Plattenelement 9 in seiner montierten Stellung in dem Rahmen 10 zumindest teilweise horizontal, so sollte der festere Abschnitt der Profilleiste 11, der die Auflage oder Anlage für das Plattenelement 9 bildet, oben liegen. Insbesondere bei einer Profilleiste 11 mit einem mit einem Nut 110 versehenen elastischen Abschnitt 115 und Spreizeinrichtungen für den Nut, wie einen Keder 111, eine Verschlußlippe 113 o.ä., kann die Anordnung aber auch andersherum sein.

Grundsätzlich ist es auch möglich, daß das Plattenelement 9 lose in den Rahmen 10 eingesetzt wird, wo es vorzugsweise durch zumindest vorübergehend wirkende Stützmittel (nicht gezeigt) oder auch nur manuell gehalten wird, und daß dann die Profilleiste 11 zwischen das Plattenelement 9 und die Rahmenteile gedrückt wird.

Wenn es nicht auf einen dichten Übergang zwischen dem Rahmen 10 und dem darin eingesetzten Plattenelement 9 ankommt, genügt es, wenn ein Plattenelement 9 beispielsweise an einer Seite über wenigstens eine Profilleiste 11 oder ein Profilleistenstück an den zugeordneten Rahmenseiten anliegt, es können aber auch auf jeder Seite des Plattenelements 9 in dessen Umfangsrichtung beabstandet mehrere Profilleisten 11 oder Profilleistenstücke angebracht sein. Dies erspart Material und Kosten und erleichtert die Arbeit, da die Profilleiste 11 nicht über den gesamten Umfang des Plattenelements 9 zwischen diesem und dem diesen umgebenden Rahmen 10 hindurchgedrückt werden muß. Insbesondere, wenn es auf einen dichten Übergang zwischen dem Rahmen 10 und dem darin eingesetzten Plattenelement 9 ankommt, wird jedoch eine um das Plattenelement 9 vollständig umlaufende Profilleiste 11 vorzuziehen sein. Ggf. können an Ecken, die durch den Rahmen 10 gebildet werden, gesonderte Eckstücke (nicht gezeigt) die Profilleisten 11 an den entsprechenden Stellen ergänzen oder ersetzen, um eine möglichst gute Dichtheit zu erreichen. Es können aber auch entsprechend modifizierte Profilleisten 11 vorgesehen werden, die der Form von Rahmenecken Rechnung tragen.

Auf Grund der Einfachheit der Erfindung ist es für einen Fachmann kein Problem, aus den Formulierungen der Ansprüche, der vorstehenden Beschreibung und/oder der Zeichnung weitere Realisierungsmöglichkeiten zu erkennen, ohne von der Erfindung abzuweichen.

Das Montagesystem kann durch einige weitere kleine aber wirkungsvolle Teile in vorteilhafter Weise ergänzt werden.

Die Figur 7 zeigt für eine T-Verbindung von zwei Rohrelementen 2 ein Zwischenstück 15, das einen guten Anschluß des geraden Endes 21 eines Rohrelements 2 an die gekrümmte Umfangswand 20 des anderen Rohrelements 2 sichert. Das Zwischenstück 15 wird relativ einfach zusätzlich z.B. auf das freie Gewindeende 81 einer Schraube 8 aufgesetzt, die etwas länger als bei einer Verwendung ohne Zwischenstück 15 gewählt ist.

Da beim Aufbau von Möbeln 14 ein schiefer Verlauf einzelner Elemente zueinander unerwünscht und störend ist, kann bei dem Montagesystem 1 weiter vorgesehen sein, daß Ausrichtmittel 12, 13 enthalten sind, mittels derer eine vorgebbare Relativlage von Rohrelement 2 und Gegenstand 5, an dem das Rohrelement 2 anbringbar ist, insbesondere hinsichtlich der Drehlage des Rohrelements 2 um seine Achse 23, einstellbar ist. In einer sehr einfachen Realisierung dieser Ausrichtmittel enthalten diese einen Stellstift 12 am Ende 21 des Rohrelements 2 und eine Aufnahmebohrung 13 im Knotenelement 50 in entsprechendem Abstand von der Bohrung 51, wie in den Figuren 5 und 6 dargestellt ist. Zu einer Bohrung 51 können auch mehrere Aufnahmebohrungen 13 im Knotenelement 50 vorgesehen werden, um eine entsprechende Mehrzahl von Stellungen des Rohrelements 2 relativ zum Knotenelement 50 zu ermöglichen, wie anhand z.B. der Figur 6 ersichtlich ist.

Je nach Design- oder Zweckvorgaben können die Rohrelemente 2, die Knotenelemente 50 und/oder die Plattenelemente 9 aus Metall, Holz oder Kunststoff oder einer Kombination daraus bestehen.

Eines Rahmen oder ein Gestell 10 als Möbel 14 kann mit dem Montagesystem 1 sehr leicht aufgebaut werden. Ähnlich einfach ist es, beispielsweise zur Halterung von Gerätschaften, wie Lampen, Lautsprechern u.v.m., Rohrelemente 2 an einer mit einer Lochrasterung versehenen Wand oder Decke zu montieren, wenn das Montagesystem 1 verwendet wird. Darüber hinaus sind noch unzählige weitere Anwendungsmöglichkeiten gegeben.

Verfahrensmäßig brauchen bei dem Montagesystem 1 nur die Verbindungseinrichtungen 4 mit ihrer Arretiervorrichtung 40 mit dem Betätigungsende 41 voraus in ein Rohrelement 2 eingesetzt werden. Eventuell wird die Lage der Arretiervorrichtung in Ausrichtung mit der Öffnung 3 in dem Rohrelement 2 durch die Öffnung hindurch z.B. mit dem Betätigungswerkzeug gesichert, damit die Verbindungseinrichtungen 4 nicht in dem Rohrelement 2 verrutschen können. Dann wird die Kombination aus Rohrelement 2 und Verbindungseinrichtungen 4 beispielsweise an ein Lochraster oder an eine Bohrung in einem Knotenelement 50 gehalten. In dieser Stellung wird dann das Betätigungsende 41 der Arretiervorrichtung 40 der Verbindungseinrichtungen 4 durch die Öffnung 3 in der Umfangswand 20 des Rohrelements 2 in Umfangsrichtung des letzteren gedreht, wodurch eine Festlegung der Arretiervorrichtung 40 in dem Rohrelement 2 und der Verbindungseinrichtungen 4 an dem Gegenstand 5, wie z.B. sowohl axial als auch radial an einem anderen Rohrelement 2, an dem Knotenelement 50 oder an einer Wand, bewirkt wird.

Wird das Rohrelement 2 mit seiner ersten Seite an dem Gegenstand 5 befestigt, so können die Verbindungseinrichtungen 4 auch zuerst an dem Gegenstand 5 angebracht werden, ohne die Arretiervorrichtung 40 auszulösen, und dann das Rohrelement auf letztere aufgeschoben werden.

Das Festlegen der Arretiervorrichtung 40 in dem Rohrelement 2 und das Festlegen der Verbindungseinrichtungen 4 an einem Gegenstand 5 erfolgt durch die Drehbetätigung des Betätigungsendes 41 der Arretiervorrichtung 40 gleichzeitig oder nacheinander. Je nach Ausgestaltung der Arretierung der Arretiervorrichtung 40 in dem Rohrelement 2 einerseits und der Verbindung der Verbindungseinrichtungen 4 mit dem Gegenstand 5 andererseits kann beim Betätigen des Betätigungsendes 41 der Arretiervorrichtung 40 zunächst das Festlegen der Verbindungseinrichtungen 4 an einem Gegenstand 5 und dann das Festlegen der Arretiervorrichtung 40 in dem Rohrelement 2 erfolgen. Beispielsweise bei der Ausführung des Montagesystems 1 mit dem elastischen Schlauch 61 als Bestandteil der Klemmvorrichtung 6 wird die stabile Befestigung der Arretiervorrichtung 40 in dem Rohrelement 2 und die stabile Befestigung der Verbindungseinrichtungen 4 an einem Gegenstand 5 durch die Drehbetätigung des Betätigungsendes 41 der Arretiervorrichtung 40 ein kombinierter Vorgang sein.

Nach dem derart einfachen Aufbau von wenigstens Rahmen- oder Gestellteilen können darin Plattenelemente 9 eingesetzt werden. Eventuell kann ein Rahmen 10 für ein Plattenelement 9 nicht vollständig aufgebaut werden, bevor das Plattenelement 9 eingesetzt, wie z.B. in den Teilrahmen eingeschoben, werden muß. Erst dann kann der Rahmen 10 vervollständigt werden. Dies hängt vom Randprofil der Plattenelemente 9 ab. Das Randprofil kann ein Eindrücken in einen fertigen umlaufenden Rahmen 10 zulassen oder nicht.

Durch das oder nach dem Einsetzen der Plattenelemente 9 in wenigstens Rahmen- oder Gestellteilen können die Öffnungen 3 in den Umfangswänden 20 der verbauten Rohrelemente 2 durch ein Dichtelement oder Dichtelemente 11 abgedeckt und vorzugsweise abgedichtet werden, wenn die Dichtelemente 11 an den Plattenelementen 9 vorangebracht sind oder gesondert nachträglich in die Gesamtkonstruktion eingesetzt werden. Eventuell kann auch Dichtmasse verwendet werden, die erst nach dem Aufbringen trocknet.

Zusätzlich oder alternativ zu den vorstehend erläuterten Ausführungen der Erfindung sind noch weitere Ausgestaltungen einzelner Merkmale möglich. So kann der zweiteilige Zylinder der Klemmvorrichtung, der auch als Dübel bezeichnet werden kann, jegliche andere Teilung als die vorgenannten aufweisen, solange er schräg zu seiner Achse verlaufende Auflauf- oder Rampenflächen enthält, die durch eine axiale Stauchung des Dübels dessen radiale Aufweitung bewirken. Die Klemm- oder Verriegelungsvorrichtung kann ferner jegliche andere Bauform haben, durch die ermöglicht wird, daß infolge einer Betätigungsbewegung in Achsenrichtung des Rohrelements ein Ausbiegen, Ausbeulen, Ausschwenken oder Ausklappen zumindest eines Teils der Klemm- oder Verriegelungsvorrichtung bewirkt wird. Statt des Schlauchs, der eine von bevorzugten Ausgestaltungen der Arretiervorrichtung darstellt, kann jegliches andere ähnlich Quetschstück zum Einsatz kommen.

Die Schraube der Verbindungseinrichtungen in Verbindung mit einem entsprechenden Gewinde in dem Gegenstand, wie z.B. dem Knotenelement, kann durch ein beliebiges anderes geeignetes Verbindungselement ersetzt werden, zu dem eine entsprechende Gegenausbildung in dem Gegenstand vorhanden ist. Durch entsprechende Ausgestaltungen eines solchen Verbindungselements kann beispielsweise bewerkstelligt werden, daß durch dessen Drehung zunächst seine Arretierung oder Verriegelung in dem Rohrelement erfolgt und durch weiteres Verdrehen der feste Anschluß an den Gegenstand hergestellt wird. Auch ohne eine Gewindeverbindung zwischen den Verbindungseinrichtungen und z.B. einem Knotenelement können diese beiden Teile drehfest miteinander verbunden werden, wenn beispielsweise eine solche Aufspreizung eines vierteiligen Endes der Verbindungseinrichtungen (ähnlich der achten Ausführung gemäß Figur 15) innerhalb eines Lochs im Knotenelement erzielbar ist, daß die vier Flügel formschlüssig in entsprechende Ausnehmungen im Umfang des Lochs einrückbar sind.

Dadurch, daß das Betätigungsende der Verbindungseinrichtungen immer durch den Umfangsschlitzabschnitt in der Umfangswand des Rohrelements betätigt werden kann, können bei der Verwendung von Knoten- oder Würfelelementen als Bindeglieder zwischen Rohrelementen für die individuelle Montagestelle genau geeignete Knoten- oder Würfelelemente verwendet werden. D.h., daß die Knoten- oder Würfelelemente nur so viele Montagelöcher haben müssen, wie an der jeweiligen Stelle erforderlich sind. Dadurch werden schwer zu reinigende Löcher vermieden, was besonders für den Einsatz des Montagesystems im Gesundheitswesen beispielsweise für Möbelaufbauten von Vorteil ist. Durch die erfindungsgemäße Gestaltung der Rohrelemente können zudem, wenn eine Erweiterung an einer Stelle durchgeführt werden soll, an der keine freien Knoten-Anschlußlöcher enthalten sind, die entsprechenden Knoten einfach ausgetauscht werden, ohne daß weitere Abbauarbeiten erforderlich sind.

Durch den Umfangsschlitzabschnitt in der Umfangswand des Rohrelements tritt jedenfalls dann keine Schwächung des Rohrelements in diesem Bereich auf, wenn z.B. als Betätigungsende der Verbindungseinrichtungen ein Schraubenkopf verwendet wird, der eine größere axiale Länge hat, als der Umfangsschlitzabschnitt, und dessen Außendurchmesser höchstens geringfügig kleiner als der Innendurchmesser des Rohrelements ist.

Durch die Erfindung können auch Rohrelemente sowohl axial als auch T-förmig aneinander angeschlossen werden. Ggf. kann bei einem T-Anschluß ein Zwischenstück verwendet werden, um einen formschlüssigen Übergang zwischen dem stumpfen planen Ende eines ersten Rohrelements und der gebogenen Umfangswand eines zweiten Rohrelements zu realisieren, an der das erste Rohrelement angebracht werden soll. In dem zweiten Rohrelement braucht dann z.B. nur eine Gewindemutter drehfest hinter einem entsprechenden Loch in der Umfangswand sitzen. Bei einer Axialverbindung kann zum Beispiel ein Klemmstück drehfest in dem ersten Rohrelement einsetzbar sein. Sowohl für Rohrelemente direkt untereinander, als auch im Zusammenhang mit Zwischenelementen, wie Knotenelementen, sind jegliche Winkelstellungen zwischen zwei Rohrelementen möglich. Insbesondere ist es auch eine Ausführungsvariante der Erfindung, Rohrelemente beispielsweise mittels der Verbindungseinrichtungen an Lochblechen zu befestigen und die Rohrelemente z.B. als Lampenhalterung, Bilderhalter, Besteck- und Geschirrhalter, Wandregalstütze, Bücherstütze oder zum Anbringen sonstiger Gegenstände und Gerätschaften zu verwenden.

Es können leicht auch universelle Rohrelemente hergestellt und bevorratet werden, die in einem 30°-, 45°-, 60°- oder 90°-Abstand Anschlußlöcher aufweisen. Ebenso können entsprechende Knotenelemente zum Einsatz kommen, die als Basis eine Würfel- oder Kugelform oder eine beliebige, jedoch vorzugsweise regelmäßige Polyedergestalt haben.

Mit dem erfindungsgemäßen Montagesystem lassen sich aber auch alle Möbelstücke herstellen. Neben Schränken, Regalen, Tischen und Stühlen können z.B. selbst Gerätewägen aufgebaut werden. Die Rohrelemente dienen dann zum Aufbau eines entsprechenden Gestells, in das Plattenelemente eingesetzt werden. Ferner ist die Verwendung von Funktionselementen, wie solchen mit Türen, Schubläden, Rollen, Beleuchtungen, Installationen für Telekommunikationseinrichtungen und EDV u.ä., oder Kühl- oder Absauganlagen für entsprechende mittels des Montagesystems hergestellten Behältnisse möglich. Die Einsatzvarianten sind unbeschränkt.

Es können ferner verschiedenste Gummiprofile zwischen den einzelnen Bauteilen des Montagesystems eingesetzt werden, um eine jeweils geforderte Abdichtung zu erreichen. Entsprechende und geeignet angeordnete Gummi- oder Kunststoff-Abdichtprofile sind dabei auch geeignet, einen evtl. vorhandene Umfangsschlitzabschnitt in der Umfangswand des Rohrelements zu verschließen. Dadurch kann mittels des erfindungsgemäßen Montagesystems z.B. auch ein Gift- oder Medikamentenschrank zusammengebaut werden, der gasdicht ist.

Dieses Abdichten insbesondere der Öffnungen in den Umfangswänden der verbauten Rohrelemente durch ein Dichtelement oder Dichtelemente in Form von Profilleisten kann je nach Ausführung vor dem, durch das oder nach dem Einsetzen der Plattenelemente in wenigstens Rahmen- oder Gestellteile zur Abdeckung und vorzugsweise Abdichtung der besagten Öffnungen evtl. sogar automatisch beim Zusammenbauen erfolgen. Durch das oder nach dem anschließenden Anbauen von den Rahmen oder das Gestell komplettierenden Rohrelementen, was durch die Erfindung nicht grundsätzlich ausgeschlossen ist, können dann die Öffnungen in deren Umfangswänden durch ein Dichtelement oder Dichtelemente in Form der Profilleiste(n) abgedeckt und vorzugsweise abgedichtet werden.

Die Profilleiste ist vorzugsweise eine Extruderleiste. Bei dem entsprechenden Herstellungsverfahren ist es auch ohne weiteres möglich, Verstärkungen oder Versteifungen, wie z.B. Kunststoff- oder Metallstreifen, insbesondere Federstahlstreifen, in die Profilleiste einzuarbeiten. Ferner ermöglicht diese Machart eine rationelle Endlosfertigung, wobei die benötigten Längen der Profilleiste problemlos von einer größeren Länge abgeschnitten werden können.

Die Verwendung von Elastikelementen als Bestandteile der Verbindungseinrichtungen, wie es gemäß der Erfindung vorgesehen ist, hat ferner den Vorteil, daß eine Schraubverbindung o.ä. dadurch gleichzeitig auf Zug gehalten wird und dadurch besonders fest und beständig ist. Da sich dadurch die Schraubverbindung o.ä. zwischen den Verbindungseinrichtungen und z.B. einem Knotenelement nicht versehentlich lösen kann, ist die Verbindung sehr sicher, auch wenn der Schraubeingriff nur über wenige, eine oder nur einen Teil einer Gewindeumdrehung erfolgt.

Die vorstehenden Ausführungsbeispiele dienen lediglich der Erläuterung des Umfangs der Erfindung, der durch die allgemeinen Darlegungen im einleitenden Teil dieser Beschreibung sowie durch die Ansprüche bestimmt ist. Konkrete Ausgestaltungen ergeben sich auch aus der Beschreibung der Ausführungsbeispiele und deren Darstellung in den Zeichnungen, wobei Verallgemeinerungen im fachmännischen Umfang auch aus den Zeichnungen und der darauf beruhenden Beschreibung gewonnen werden können.

### Bezugszeichenliste

- 1: Montagesystem
- 10: Rahmen oder Gestell
- 11: Dichtelement
- 110: Nut
- 11: Keder
- 112a, 112b: Lippen
- 113: Verschlußlippe
- 113a: Filmscharnier
- 113b: Wulst
- 113c: Dünnstelle
- 114: Montageleiste
- 115: elastischer Abschnitt
- 12, 13: Ausrichtmittel
- 14: Möbel
- 15: Zwischenstück
- 2: Rohrelement
- 20: Umfangswand des Rohrelements
- 21: axiales Ende des Rohrelements
- 22: Endbereich des Rohrelements
- 23: Rohrelementachse
- 24: Innenwand
- 3: Öffnung
- 30: Umfangsschlitzabschnitt
- 31: Axialschlitzabschnitt
- 4: Verbindungseinrichtungen
- 40: Arretiervorrichtung
- 41: Betätigungsende
- 42: Eingriffsvertiefung
- 43: Radialbohrungen
- 43': Endschlitze
- 44: Zahnung
- 45: Zahnrad
- 451: Werkzeug
- 452, 453: Werkzeugarm
- 454: Zahnausbildung
- 455: Greifer
- 46: Imbus-, Torax-, Schlitz-, Kreuzschlitz- o.ä. Ausgestaltung
- 460: Imbusschlüssel
- 461: Ratscheneinrichtung
- 47: Handhabe
- 470: Radialsackloch
- 471: Betätigungsstift
- 472: Feder
- 48: Umlenkvorrichtung
- 49: eingangsseitige Drehachse der Umlenkvorrichtung
- 5: Gegenstand
- 50: Knotenelement
- 51: Öffnung oder Bohrung in dem Gegenstand
- 52: Verschlußmittel
- 6: Klemmvorrichtung
- 60: rohrförmiges Elastikelement
- 61: elastischer Schlauch
- 62: zweiteiliger Zylinder
- 620: Nut
- 621: Federstahlring
- 63, 64: identische Teile des Zylinders
- 65: Rampenflächen
- 66: Beilagscheiben
- 67: Hohlzylinder
- 670: Längsschlitze
- 68: Hülse
- 680: Flügel
- 69: Kegelkörper
- 8: Bolzen oder Schraube
- 80: Kopf des Bolzens oder der Schraube
- 81: freies Gewindeende der Schraube
- 82: freies Ende des Schraubenkopfes
- 9: Plattenelement
- 91: Montagenut
- 92: Seitenwände des Plattenelements

## Patentansprüche

1. Montagesystem mit wenigstens einem Rohrelement und Verbindungseinrichtungen, durch die das Rohrelement an einem Gegenstand montierbar ist, wobei die Verbindungseinrichtungen eine Arretiervorrichtung mit einem Betätigungsende enthalten, das koaxial in das Rohrelement einsetzbar und in dessen Umfangsrichtung zum Festlegen und Freigeben der Arretiervorrichtung in dem Rohrelement und zum Verbinden der Verbindungseinrichtungen mit dem Gegenstand betätigbar ist, wobei das Rohrelement in seiner Umfangswand zumindest eine Öffnung enthält, durch die das Betätigungsende der Arretiervorrichtung betätigbar ist, **dadurch gekennzeichnet**, daß die Öffnung (3) in der Umfangsrichtung des Rohres eine Länge hat, die einem Winkelbereich des Rohrelementquerschnitts von mehr als 90° bis zu mehr als etwa 180° entspricht, und daß das Betätigungsende (41) der Arretiervorrichtung (40) einen Außendurchmesser, der geringfügig kleiner als der Innendurchmesser des Rohrelements (2) ist, sowie eine axiale Länge hat, die größer als die axiale Ausdehnung der Öffnung (3) in der Umfangswand (20) des Rohrelements (2) ist.

2. Montagesystem nach Anspruch 1, **dadurch gekennzeichnet**, daß die Öffnung (3) in Richtung der Rohrelementachse (23) eine Ausdehnung hat, die einem durch die Betätigung des Betätigungsendes (41) der Arretiervorrichtung (40) in Umfangsrichtung des Rohrelements (2) bewirkbaren Reaktionsweg der Arretiervorrichtung (40) in Richtung der Rohrelementachse (23) zum Montieren des Rohrelements (2) durch die Verbindungseinrichtungen (4) an einem Gegenstand (5) entspricht,
wobei vorzugsweise die Öffnung (3) in der Umfangswand (20) des Rohrelements (2) einen Axialschlitzabschnitt (31) enthält, der in einem auf das in das Rohrelement (2) eingesetzte Betätigungsende (41) der Arretiervorrichtung (40) abgestimmten Abstand vom axialen Ende (21) des Rohrelements (2) angeordnet und zum Einführen eines Werkzeugs zur Betätigung des Betätigungsendes (41) der Arretiervorrichtung (40) ausgelegt ist.

3. Montagesystem nach einem der vorhergehenden Ansprüche, **dadurch gekennzeichnet**, daß das Betätigungsende (41) der Arretiervorrichtung (40) für einen formschlüssigen Ansatz eines Werkzeugs zumindest eine Eingriffsvertiefung (42) enthält, die bei in das Rohrelement (2) eingesetzter Arretiervorrichtung (40) durch die Öffnung (3) in der Umfangswand (20) des Rohrelements (2) zum Ansetzen des Werkzeugs zugänglich ist,
wobei vorzugsweise jede Eingriffsvertiefung (42) am Betätigungsende (41) der Arretiervorrichtung (40) in Richtung der Rohrelementachse (23) eine Ausdehnung hat, die einem durch die Betätigung des Betätigungsendes (41) der Arretiervorrichtung (40) in Umfangsrichtung des Rohrelements (2) bewirkbaren Reaktionsweg der Arretiervorrichtung (40) in Richtung der Rohrelementachse (23) zum Montieren des Rohrelements (2) durch die Verbindungseinrichtungen (4) an einem Gegenstand (5) entspricht,
und/oder wobei insbesondere im Umfang des Betätigungsendes (41) der Arretiervorrichtung (40) zumindest zwei Eingriffsvertiefungen (42) in Form von Radialbohrungen (43) vorgesehen sind, die in Umfangsrichtung einen derartigen Abstand haben, daß zumindest zwei Radialbohrungen (43) gleichzeitig durch die Öffnung (3) oder ggf. den Umfangsschlitzabschnitt (30) zugänglich sind,
und/oder wobei bevorzugt eine Mehrzahl von Eingriffsvertiefungen (42) in Form einer Zahnung (44) des Umfangs des Betätigungsendes (41) der Arretiervorrichtung (40) vorgesehen sind.

4. Montagesystem nach einem der vorhergehenden Ansprüche, **dadurch gekennzeichnet**, daß die Arretiervorrichtung (40) eine durch Betätigung ihres Betätigungsendes (41) in Umfangsrichtung radial aufweitbare Klemmvorrichtung (6) enthält, mittels der die Arretiervorrichtung (40) zumindest gegen Kräfte in Richtung gegen ein Herausziehen der Arretiervorrichtung (40) aus dem Rohrelement (2) in letzterem kraftschlüssig, vorzugsweise durch Reibschluß, lösbar festlegbar ist,
wobei bevorzugt die Klemmvorrichtung (6) zum Reibschluß mit dem Rohrelement (2) ein koaxial in letzteres einführbares, rohrförmiges Elastikelement (60) enthält, das durch Drehbetätigung des Betätigungsendes (41) der Arretiervorrichtung (40) in Achsenrichtung (23) des Rohrelements (2) unter radialer Aufweitung gegen die Innenwand (24) des Rohrelements (2) reversibel axial stauchbar ist, wobei das rohrförmige Elastikelement (60) ein elastischer Schlauch (61) insbesondere aus Gummi oder Kunststoff ist,
und/oder wobei insbesondere die Klemmvorrichtung (6) zum Reibschluß mit dem Rohrelement (2) einen koaxial in letzteres einführbaren, unter Bildung von Rampenflächen (65) schräg geteilten zweiteiligen Zylinder (62) enthält, der durch Drehbetätigung des Betätigungsendes (41) der Arretiervorrichtung (40) unter Aufweitung in Richtung eines Durchmessers des Zylinders (62) über die Rampenflächen (65) gegen die Innenwand (24) des Rohrelements (2) reversibel axial zusammenschiebbar ist, wobei vorzugsweise der Zylinder (62) aus zwei identischen Teilen (63, 64) besteht, die sich insbesondere durch einen schräg durch seine Grundflächen verlaufenden Schnitt ergeben,
oder daß die Arretiervorrichtung (40) eine durch Betätigung ihres Betätigungsendes (41) in Umfangsrichtung betätigbare Verriegelungsvorrichtung enthält, mittels der die Arretiervorrichtung (40) zumindest gegen Kräfte in Richtung eines Herausziehens der Arretiervorrichtung (40) aus dem Rohrelement (2) in letzterem formschlüssig und lösbar festlegbar ist, wobei bevorzugt die Verriegelungsvorrichtung durch Betätigung des Betätigungsendes (41) der Arretiervorrichtung (40) in Umfangsrichtung zu einer formschlüssigen Verbindung mit dem Rohrelement (2) radial aufweitbar ist,
wobei insbesondere zur Betätigung der Klemmvorrichtung (6) bzw. der Verriegelungsvorrichtung ein Bolzen mit einer gewindeähnlichen Ausbildung oder eine Schraube (8) vorgesehen ist, dessen bzw. deren Kopf (80) das Betätigungsende (41) der Arretiervorrichtung (40) bildet, und vorzugsweise die Arretiervorrichtung (40) derart ausgebildet ist, daß zum Verstellen der Klemmvorrichtung (6) bzw. der Verriegelungsvorrichtung zwischen einem freien und einem arretierten Zustand der Arretiervorrichtung (40) in dem Rohrelement (2) maximal eine Umdrehung des Bolzens oder der Schraube (8) und vorzugsweise nur eine Teilumdrehung des Bolzens oder der Schraube (8) erforderlich ist.

5. Montagesystem nach einem der vorhergehenden Ansprüche, **dadurch gekennzeichnet**, daß die Verbindungseinrichtungen (4) durch Drehbetätigung am Betätigungsende (41) über eine Verschraubung an einem Gegenstand (5) festlegbar sind, wobei ggf. insbesondere der Bolzen oder die Schraube (8) zur Betätigung der Klemmvorrichtung (6) bzw. der Verriegelungsvorrichtung in den Gegenstand (5) eindrehbar, einrückbar oder einschraubbar ist,
oder daß die Verbindungseinrichtungen (4) durch Drehbetätigung am Betätigungsende (41) über eine Klemmung oder Verriegelung an einem Gegenstand (5) festlegbar sind, wobei ggf. insbesondere die Klemmvorrichtung (6) bzw. die Verriegelungsvorrichtung der Arretiervorrichtung (40) zu deren Festlegung in dem Rohrelement (2) in einer Öffnung oder Bohrung (51) in dem Gegenstand (5) lösbar festlegbar ist.

6. Montagesystem nach einem der vorhergehenden Ansprüche,
**dadurch gekennzeichnet**,
daß der Gegenstand (5), an dem das Rohrelement (2) anbringbar ist, ein zum Montagesystem gehörendes Knotenelement (50) insbesondere in Form eines Würfels, eines Quaders oder einer Kugel ist, wobei das Knotenelement (50) eine Mehrzahl von Bohrungen (51) zum Befestigen von Rohrelementen (2) mittels der Verbindungseinrichtungen (4) durch Verschraubung, Verriegelung oder Klemmung enthält, und/oder daß aus den Rohrelementen (2) oder ggf. aus den Rohr- und den Knotenelementen (2, 50) Rahmen oder Gestelle (10) aufbaubar sind, wobei insbesondere Plattenelemente (9) vorgesehen sind, die in die Rahmen oder Gestelle (10) einsetzbar sind,
und/oder daß Ausrichtmittel (12, 13) vorgesehen sind, mittels derer eine vorgebbare Relativlage von Rohrelement (2) und Gegenstand (5), an dem das Rohrelement (2) anbringbar ist, insbesondere hinsichtlich der Drehlage des Rohrelements (2) um seine Achse (23), einstellbar ist.

7. Montagesystem nach einem der vorhergehenden Ansprüche,
**dadurch gekennzeichnet**,
daß ein Dichtelement oder Dichtelemente (11) zum Abdecken und vorzugsweise Abdichten der Öffnung oder Öffnungen (3) in der Umfangswand (20) des Rohrelements (2) vorgesehen ist bzw. sind, wobei insbesondere das Dichtelement oder die Dichtelemente (11) an dem Rohrelement (2) oder ggf. vorzugsweise an dem Plattenelement (9) angeordnet ist bzw. sind,
und/oder daß zum Übergang zwischen den Rohrelementen (2) eines Rahmens (10) und einem darin einsetzbaren Plattenelement (9) wenigstens eine Profilleiste als Dichtelement (11) vorgesehen ist,
wobei insbesondere die wenigstens eine Profilleiste (11) vor dem Einsetzen des Plattenelements (9) in den Rahmen (10) fest oder lösbar an dem Plattenelement (9) oder an den Rohrelementen (2) des Rahmens (10) angebracht oder angbringbar ist,
und/oder wobei bevorzugt die Profilleiste (11) einen elastischen Abschnitt (115) enthält, der beim Einsetzen der Profilleiste (11) zwischen den Rahmen (10) und das Plattenelement (9) oder beim Einsetzen des Plattenelements (9) mit daran oder an den Rohrelementen (2) des Rahmens (10) angebrachter Profilleiste (11) zusammendrückbar ist.

8. Verfahren zum Aufbauen eines Rahmens oder Gestells (10) oder Anbringen von Gerätschaften (53) mit einem Montagesystem (1) nach einem der vorhergehenden Ansprüche, **dadurch gekennzeichnet**, daß das Betätigungsende (41) der Arretiervorrichtung (40) der Verbindungseinrichtungen (4) durch die Öffnung (3) in der Umfangswand (20) des Rohrelements (2) in Umfangsrichtung des letzteren gedreht wird, wodurch eine Festlegung der Arretiervorrichtung (40) in dem Rohrelement (2) und der Verbindungseinrichtungen (4) an einem Gegenstand (5), wie sowohl axial als auch radial an einem anderen Rohrelement (2), an einem Knotenelement (50) oder an einer Wand, bewirkt wird, wobei insbesondere das Festlegen der Arretiervorrichtung (40) in dem Rohrelement (2) und das Festlegen der Verbindungseinrichtungen (4) an einem Gegenstand (5) durch die Drehbetätigung des Betätigungsendes (41) der Arretiervorrichtung (40) gleichzeitig oder nacheinander erfolgt,
wobei bevorzugt durch Betätigen des Betätigungsendes (41) der Arretiervorrichtung (40) zunächst das Festlegen der Verbindungseinrichtungen (4) an einem Gegenstand (5) und dann das Festlegen der Arretiervorrichtung (40) in dem Rohrelement (2) erfolgt,
oder die stabile Befestigung der Arretiervorrichtung (40) in dem Rohrelement (2) und die stabile Befestigung der Verbindungseinrichtungen (4) an einem Gegenstand (5) durch die Drehbetätigung des Betätigungsendes (41) der Arretiervorrichtung (40) ein kombinierter Vorgang ist.

9. Verfahren nach Anspruch 8, **dadurch gekennzeichnet**, daß nach dem Aufbau von wenigstens Rahmen- oder Gestellteilen darin Plattenelemente (9) eingesetzt werden,
wobei insbesondere vor dem, durch das oder nach dem Einsetzen der Plattenelemente (9) in wenigstens Rahmen- oder Gestellteilen die Öffnungen (3) in den Umfangswänden (20) der verbauten Rohrelemente (2) durch ein Dichtelement oder Dichtelemente (11) abgedeckt und vorzugsweise abgedichtet werden, wobei bevorzugt durch das oder nach dem Anbauen von den Rahmen oder das Gestell (10) komplettierenden Rohrelementen (2) die Öffnungen (3) in deren Umfangswänden (20) durch ein Dichtelement oder Dichtelemente (11) abgedeckt und vorzugsweise abgedichtet werden,
und/oder daß das Betätigungsende (41) der Arretiervorrichtung (40) als Zahnrad (45) mit einer Zahnung (44) ausgebildet ist, und die Drehbetätigung des Zahnrades (45) durch die Öffnung (3) in der Umfangswand (20) des Rohrelements (2) mittels eines insbesondere motorgetriebenen Werkzeugs erfolgt.
